# EUROPEAN PATENT APPLICATION

(11) **EP 3 173 763 A1**
(43) Date of publication of application: **31.05.2017**
(21) Application number: 15821903.0
(22) Date of filing: 09.07.2015
(51) Int. Cl.: G01M 13/04, G01M 99/00

(54) **MACHINE COMPONENT DIAGNOSIS SYSTEM AND SERVER THEREOF**

(30) Priority: 18.07.2014 JP 2014147489; 18.07.2014 JP 2014147490
(71) Applicant: NTN Corporation, Osaka-shi, Osaka 550-0003 (JP)
(72) Inventor: TAKADA, Seiichi, Kuwana-shi Mie 511-8678 (JP); ITOMI, Shoji, Kuwana-shi Mie 511-8678 (JP)
(74) Representative: Maikowski & Ninnemann Patentanwälte Partnerschaft mbB
(86) International application number: PCT/JP2015/069728
(87) International publication number: WO 2016/009932

(57) **Abstract**

Provided is a machine component diagnosis system having high convenience and performing highly accurate malfunction diagnosis. This system includes: an information terminal (2), a server (6) connected to the information terminal (2) via a communication line network (7); a vibration sensor (3) that measures vibration of a diagnosis subject (1); and an additional sensor (4) that measures one characteristic of the diagnosis subject (1). The additional sensor includes a temperature sensor (41) or an AE sensor (42). The temperature sensor (41) measures, as the one characteristic, temperature of the diagnosis subject (1). The AE sensor (42) measures, as the one characteristic, an acoustic emission wave (AE wave).

## Description

### CROSS REFERENCE TO THE RELATED APPLICATION

This application is based on and claims Convention priority to Japanese patent applications Nos. 2014-147489 and 2014-147490, filed July 18, 2014, the entire disclosures of which are herein incorporated by reference as a part of this application.

### BACKGROUND OF THE INVENTION

### (Field of the Invention)

The present invention relates to: a machine component diagnosis system which enables diagnosis, utilizing a server having an advanced computing function, for various diagnosis subjects, for example, rolling bearings, constant velocity ball joints, and the like by using an information terminal such as a portable information terminal and a sensor; and the server.

### (Description of Related Art)

As a malfunction diagnosis method for rolling bearings or the like, inspecting a vibration value of a rolling bearing or the like by using a vibration sensor has been generally known. In addition, a malfunction diagnosis system has been proposed in which data processing software is downloaded from a server to a portable information terminal such as a smartphone, and malfunction diagnosis is performed by using the portable information terminal and a dedicated sensor connected to the portable information terminal (for example, Patent Document 1).

As another malfunction diagnosis method for rolling bearings or the like, a method of detecting an increase in temperature of a rolling bearing or the like to perform malfunction diagnosis has also been proposed (for example, Patent Document 2).

Patent Document 2 also discloses, as a malfunction diagnosis method for rolling bearings or the like, a method of detecting an acoustic emission wave (hereinafter sometimes referred to as "AE wave") of a rolling bearing or the like by using an AE sensor, and performing malfunction determination on the basis of the AE wave in combination with measurement by a vibration sensor. Patent Document 2 also discloses estimation of remaining lifetime of a diagnosis subject based on a value detected by the AE sensor.

### [Related Document]

### [Patent Document]

[Patent Document 1] JP Laid-open Patent Publication No. 2013-228352
[Patent Document 2] JP Laid-open Patent Publication No. 2012-181168

### SUMMARY OF THE INVENTION

The machine component diagnosis system using the portable information terminal and the like, which is disclosed in Patent Document 1, has extremely high convenience. Generally, a machine component diagnosis system is adopted with primary importance being placed on its high convenience while accuracy of malfunction diagnosis, estimation possibility for remaining lifetime of a diagnosis subject, and the like are not concerned. However, a machine component diagnosis system has been desired which has, in addition to high convenience, high accuracy of malfunction determination and/or estimation possibility for remaining lifetime of a diagnosis subject.

An object of the present invention is to provide: a machine component diagnosis system in which convenience of use is promoted by using a server and an information terminal, and which is able to enhance accuracy of malfunction diagnosis or is able to perform malfunction diagnosis and estimation of remaining lifetime; and the server.

Hereinafter, for convenience of easy understanding, a description will be given with reference to the reference numerals in embodiments.

A machine component diagnosis system according to a first aspect of the present invention relates to a system for diagnosing malfunction of a diagnosis subject (a subject to be diagnosed) 1 composed of a machine component, the system comprising:
at least one information terminal 2;
a server 6 connected to the at least one information terminal 2 via a communication line network 7;
a vibration sensor 3 configured to measure vibration of the diagnosis subject 1;
an additional sensor 4 configured to measure one characteristic of the diagnosis subject 1, the additional sensor 4 being a temperature sensor 41 or an AE sensor 42, the temperature sensor 41 being configured to measure, as the one characteristic, temperature of the diagnosis subject 1, the AE sensor 42 being configured to measure, as the one characteristic, an acoustic emission wave (AE wave); and
an A/D converter 5 configured to perform A/D conversion on a piece of acceleration data representing acceleration of the vibration measured by the vibration sensor 3, and on a piece of characteristic data representing the one characteristic measured by the additional sensor 4, wherein
each of the at least one information terminal 2 includes:
   a measurement data transmission module 35 configured to capture the A/D converted pieces of acceleration data and characteristic data, and transmit the pieces of data to the server 6; and
   a diagnosis result display module 36 configured to display a diagnosis result that is sent back from the server 6 in response to the transmitted pieces of data, and
the server 6 includes:
   a reception processing module 13 configured to receive the pieces of acceleration data and characteristic data transmitted from the information terminal 2;
   a diagnosis module 8 configured to diagnose malfunction of the diagnosis subject 1 by using the one characteristic represented by the piece of characteristic data, when the acceleration of the vibration represented by the received acceleration data falls within a boundary range for malfunction determination; and
   a diagnosis result transmission module 14 configured to send a diagnosis result of the diagnosis module 8 back to the information terminal 2.

According to this configuration, the pieces of data measured with respect to the diagnosis subject 1 is transmitted from the information terminal 2 to the server 6, and the server 6 performs malfunction diagnosis. Therefore, accurate malfunction diagnosis can be performed by utilizing excellent processing performance of the server 6. In particular, in the case where the additional sensor 4 is the AE sensor 42 and the characteristic data is the AE data, since the server 6 performs estimation of remaining lifetime in addition to malfunction diagnosis, accurate malfunction diagnosis and accurate estimation of remaining lifetime can be performed by utilizing the excellent processing performance of the server 6. In this case, it may sometimes be difficult to determine whether or not malfunction has occurred, based on only the piece of acceleration data representing acceleration of the vibration measured by the vibration sensor 3. That is, the acceleration of the vibration represented by the piece of acceleration data may fall within the boundary range for the malfunction determination. However, in the above configuration, one characteristic of the diagnosis subject 1 is measured in addition to vibration, and information obtained from this characteristic is used for malfunction diagnosis, whereby accuracy of diagnosis is enhanced.

In a preferred embodiment, when the acceleration of the vibration represented by the received piece of acceleration data falls within the boundary range, the diagnosis module diagnoses malfunction of the diagnosis subject by comparing the one characteristic represented by the piece of characteristic data with a boundary level that is different from a normal level. Here, the "level" is a threshold value, for example. The boundary level is preferably a level at which it is more likely to be determined that malfunction has occurred, as compared to the normal level. Specifically, when the characteristic data is temperature data and it is assumed that the normal level is a certain temperature, the boundary level is a temperature lower than the certain temperature. When the characteristic data is AE data and it is assumed that the normal level is a certain maximum amplitude of an envelope waveform of the AE data, the boundary level is an amplitude smaller than the maximum amplitude.

In a preferred embodiment, the additional sensor 4 is the temperature sensor 41, the one characteristic is the temperature, and the characteristic data is temperature data representing the temperature measured by the temperature sensor 41.

According to this configuration, for example, there are cases where the acceleration of the vibration represented by acceleration data falls within the boundary range, that is, where the acceleration of the vibration falls within a range in which it is difficult to determine whether or not malfunction has occurred. Under such a difficult situation, final or definite determination that malfunction has occurred is made when it is determined, on the basis of the temperature data, that malfunction has occurred, whereby malfunction diagnosis can be accurately performed. When the temperature indicates malfunction, it is possible to diagnose that malfunction has occurred, based on only the temperature. However, there are many cases where malfunction has occurred even when the temperature falls within a normal range. In addition, it is difficult to specify a malfunctioning part or area on the basis of the temperature alone. In these cases, if the acceleration data obtained by the vibration sensor 3 is used for malfunction diagnosis, diagnosis of early malfunction can be performed, and a malfunctioning part or area can be specified by frequency analysis or the like.

In an alternative preferred embodiment, the additional sensor 4 is the AE sensor 42, the one characteristic is the AE wave, and the characteristic data is AE data representing the AE wave measured by the AE sensor 42.

The remaining lifetime cannot be estimated on the basis of the acceleration of the vibration represented by the piece of acceleration data measured by the vibration sensor 3. However, in the above configuration, an AE wave is measured, and inner cracks of the diagnosis subject can be detected on the basis of the AE wave. Therefore, remaining lifetime of the diagnosis subject can be estimated by estimating the degree of progress of the inner cracks on the basis of the measured AE wave. In addition, malfunction of the diagnosis subject can also be diagnosed on the basis of the AE wave, and malfunction diagnosis can be performed from a viewpoint different from that based on the acceleration data obtained by the vibration sensor 3. Therefore, accuracy of malfunction diagnosis is enhanced when the diagnosis module 8 performs malfunction diagnosis on the basis of both the pieces of acceleration data and AE data.

In a preferred embodiment, the diagnosis subject 1 may be a rotary machine component having a rolling element. In the case where the diagnosis subject 1 includes a rotary machine component, particularly, a rolling bearing or the like, if malfunction determination or the like is performed by using not only the measurement data of acceleration of vibration but also the temperature data or the AE data, accuracy of the malfunction diagnosis is enhanced.

In this specification, the "rotary machine component" indicates a machine component having a rolling element such as a rolling bearing, a constant velocity ball joint, or the like.

In a preferred embodiment, the information terminal 2 is a general-purpose portable information terminal 2 having an OS 9 capable of installing an application program, and the measurement data transmission module 35 and the diagnosis result display module 36 may be implemented in the portable information terminal 2 when terminal processing software 33 including the application program is installed.

In this configuration, the general-purpose portable information terminal 2 is used as: means for reading the measurement data obtained by the vibration sensor 3 and the measurement data obtained by the temperature sensor 41 or the AE sensor 42, and transmitting these measurement data to the server 6 to cause the server 6 to process these data; and means for displaying the diagnosis result transmitted from the server 6. Therefore, by only preparing the vibration sensor 3, the temperature sensor 41 or the AE sensor 42, and the A/D converter 5, it is possible to perform malfunction diagnosis on the basis of measured acceleration of vibration and measured temperature or AE wave by using the popularized portable information terminal 2 such as a smartphone, a tablet, or the like.

The general-purpose portable information terminal 2 is a smartphone, a tablet, or the like, and may not necessarily have a telephone function, but is an information processing device that is connectable to the server 6 via a wide-area communication line network 7 such as a telephone network, the Internet, or the like and has an OS (operation program) 9 that is able to download and install an application program. The vibration sensor 3 is, for example, a vibration pickup, and is connected to the portable information terminal 2 via a cable 5b having a terminal 5c that conforms to a standard such as micro USB (one of USB standards as connection interface standards), or a wireless LAN. Alternatively, the vibration sensor 3 may be configured to be able to supply data to the portable information terminal 2 via an attachable/detachable storage medium such as a memory chip, a USB memory, or the like.

The vibration sensor 3 and the temperature sensor 41 or the AE sensor 42 may be provided in dedicated two pickups 3A and 4A, respectively, and the two pickups 3A and 4A may be exchangeably connected to the A/D converter 5. Alternatively, the vibration sensor 3 and the temperature sensor 41 or the AE sensor 42 may be provided in a common pickup 3A. The piece of acceleration data or the piece of temperature data or AE data may be inputted to the measurement data transmission module 35, the inputted piece being changed by a switching operation of a changeover switch provided in the A/D converter 5 or by the measurement data transmission module 35 having a switching function.

Communication between the information terminal 2, and the vibration sensor 3 and the temperature sensor 41 or the AE sensor 42 is preferred to be serial transmission in terms of simplification of configuration. In this case, if the vibration sensor 3 and the temperature sensor 41 or the AE sensor 42 are provided in the dedicated pickups and are exchangeably connected to the A/D converter 5, the A/D converter 5 can be shared by vibration measurement and temperature measurement. If the vibration sensor 3 and the temperature sensor 41 or the AE sensor 42 are provided in the common pickup and are switched as described above, the vibration sensor 3 and the temperature sensor 41 or the AE sensor 42 are arranged together, whereby handling and storage are facilitated.

In a preferred embodiment, when the additional sensor 4 is the temperature sensor 41, the diagnosis module 8 of the server 6 may include: a vibration-based malfunction diagnosis unit 8a configured to diagnose malfunction of the diagnosis subject 1 on the basis of the acceleration of vibration represented by the piece of acceleration data; a temperature-based malfunction diagnosis unit 8b configured to diagnose malfunction of the diagnosis subject 1 on the basis of the temperature represented by the piece of temperature data; and a comprehensive diagnosis unit 8c configured to finally or definitely diagnose malfunction of the diagnosis subject 1 by using diagnosis results of the vibration-based malfunction diagnosis unit 8a and the temperature-based malfunction diagnosis unit 8b. This comprehensive diagnosis unit 8c may be configured to determine that malfunction has occurred in the diagnosis subject 1, when either the vibration-based malfunction diagnosis unit 8a or the temperature-based malfunction diagnosis unit 8b determines that malfunction has occurred.

As described above, there are cases where the acceleration of the vibration represented by the piece of acceleration data falls within a boundary range, that is, where the acceleration of the vibration represented by the piece of acceleration data falls within a range in which it is difficult to determine malfunction. Under such a difficult situation, final or definite determination that malfunction has occurred is made when it is determined, on the basis of the temperature data, that malfunction has occurred, whereby malfunction diagnosis can be accurately performed.

In a preferred embodiment, when the additional sensor 4 is the AE sensor 42, the diagnosis module 8 of the server 6 may include: a vibration-based malfunction diagnosis unit 8a configured to diagnose malfunction of the diagnosis subject 1 on the basis of the acceleration of the vibration represented by the piece of the acceleration data; an AE-based diagnosis unit 8d having a function to diagnose malfunction of the diagnosis subject 1 on the basis of the AE wave represented by the piece of AE data; and a comprehensive diagnosis unit 8c configured to finally or definitely diagnose malfunction of the diagnosis subject 1 by using the diagnosis results of the vibration-based malfunction diagnosis unit 8a and the AE-based diagnosis unit 8d.

Using both the determination based on the acceleration data and the determination based on the AE data as described above realizes more reliable malfunction diagnosis. There are cases where the acceleration of the vibration represented by the piece of acceleration data falls within a boundary range, that is, where the acceleration of the vibration represented by the piece of acceleration data falls within a range in which it is difficult to determine malfunction. Under such a difficult situation, final or definite determination that malfunction has occurred is made when it is determined, on the basis of the AE data, that malfunction has occurred, whereby malfunction diagnosis can be accurately performed. It should be noted that there are possibilities that t malfunction that does not appear in the acceleration data appears in the AE wave.

A server 6 according to one configuration of the present invention relates to a server including the server in the machine component diagnosis system.

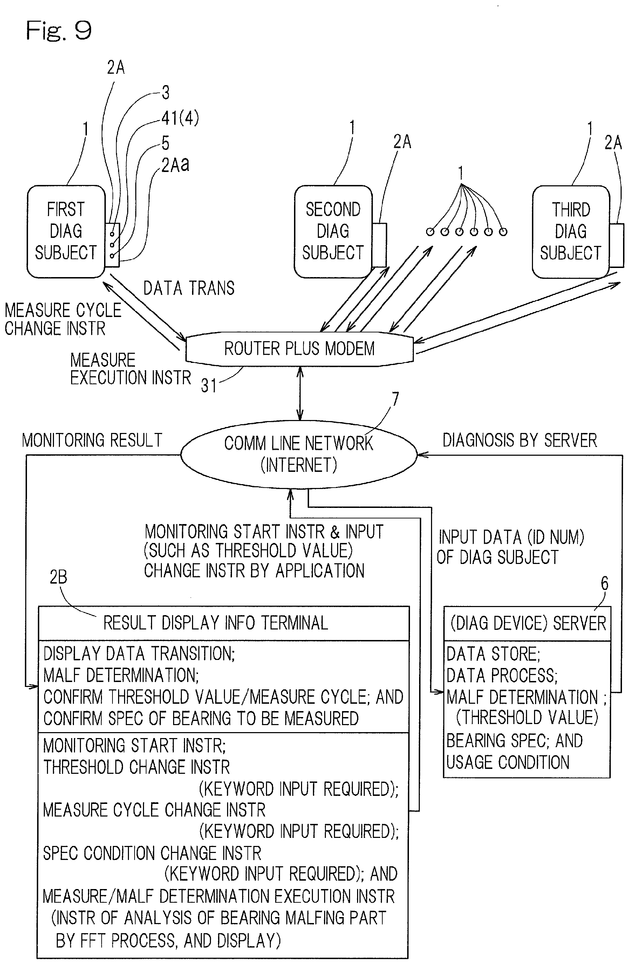

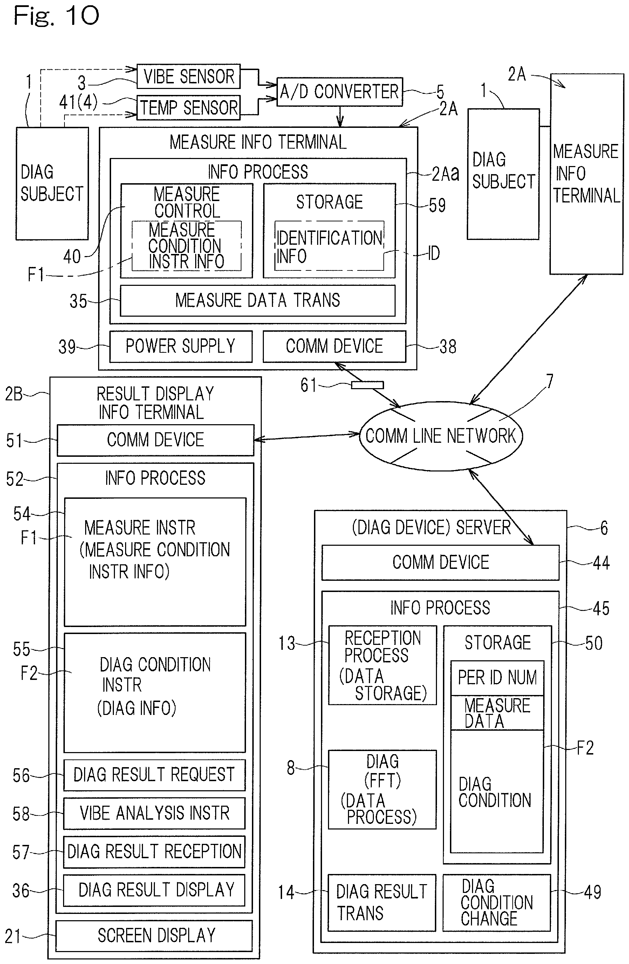

Another machine component diagnosis system according to a second aspect of the present invention relates to a system for diagnosing malfunction of a plurality of diagnosis subjects 1 each composed of a machine component, the system comprising:
a plurality of measurement information terminals 2A (Fig. 9, Fig. 10) associated with the plurality of diagnosis subjects 1, respectively;
a result display information terminal 2B;
a server 6 connected to the plurality of measurement information terminals 2A and to the result display information terminal 2B via a communication line network 7;
a plurality of vibration sensors 3 associated with the plurality of diagnosis subjects 1, respectively, each vibration sensor 3 being configured to measure vibration of the associated diagnosis subject 1;
a plurality of additional sensors 4 associated with the plurality of diagnosis subjects 1, respectively, the plurality of additional sensors 4 being temperature sensors 41 or AE sensors 42, each additional sensor 4 being configured to measure one characteristic of the associated diagnosis subject 1, each temperature sensor 41 being configured to measure, as the one characteristic, temperature of the associated diagnosis subject 1, each AE sensor 42 being configured to measure, as the one characteristic, an acoustic emission wave (AE wave) of the associated diagnosis subject 1; and
a plurality of A/D converters 5 associated with the plurality of vibration sensors 3 and the plurality of additional sensors 4, respectively, each A/D converter being configured to perform A/D conversion on a piece of acceleration data representing acceleration of the vibration measured by the associated vibration sensor 3, and on a piece of characteristic data representing the one characteristic measured by the associated additional sensor 4, and to input the A/D converted pieces of data to the associated measurement information terminal 2A, wherein
each of the plurality of measurement information terminals 2A includes an information processing module 2Aa configured to capture the inputted pieces of acceleration data and characteristic data to transmit the pieces of data to the server 6,
the result display information terminal 2B includes a diagnosis result display module 36 configured to display a diagnosis result transmitted from the server 6, and
the server 6 includes:
   a reception processing module 13 configured to receive the acceleration data and the characteristic data transmitted from one of the plurality of measurement information terminals 2A;
   a diagnosis module 8 configured to, when the acceleration of the vibration represented by the received piece of acceleration data falls within a boundary range for malfunction determination, diagnose, by using the one characteristic represented by the piece of characteristic data, malfunction of the diagnosis subject 1 associated with the measurement information terminal 2A that has transmitted the pieces of data; and
   a diagnosis result transmission module 14 configured to transmit a diagnosis result of the diagnosis module 8 to the result display information terminal 2B.

The plurality of diagnosis subjects 1 include not only a plurality of components but also a plurality of diagnosis subject portions of a single component.

In this configuration, it is possible to collectively manage all diagnoses by displaying, on a single result display information terminal 2B, a plurality of diagnosis subjects 1 and/or the results of malfunction diagnoses based on measurement data at a plurality of portions of a diagnosis subject 1. In this case, accuracy of malfunction diagnosis is enhanced as described above by using the acceleration data obtained by the vibration sensor 3 and the temperature data obtained by the temperature sensor 41 or the AE data obtained by the AE sensor 42. When the AE sensor 42 is used, estimation of remaining lifetime can also be performed in addition to malfunction diagnosis.

In a preferred embodiment, each of the plurality of additional sensors 4 is a temperature sensor 41, the one characteristic is temperature, and the piece of characteristic data is a piece of temperature data representing the temperature measured by each of the plurality of temperature sensors 41.

In alternative preferred embodiment, each of the plurality of additional sensors 4 is an AE sensor 42, the one characteristic is an AE wave, and the piece of characteristic data is a piece of AE data representing the AE wave measured by each of the plurality of AE sensors 42.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a diagram illustrating a schematic configuration of a machine component diagnosis system according to a first embodiment of the present invention;
Fig. 2 is a perspective view illustrating an alternative example of a connection mode of a sensor in the diagnosis system shown in Fig. 1;
Fig. 3 is a block diagram illustrating a schematic configuration of a vibration-based malfunction diagnosis unit of a server in the diagnosis system shown in Fig. 1;
Fig. 4 is a diagram illustrating a manner of obtaining a speed, a displacement, an effective value, and the like by the machine component diagnosis system shown in Fig. 1;
Fig. 5 is a block diagram illustrating a schematic configuration of a temperature-based malfunction diagnosis unit of the server in the machine component diagnosis system shown in Fig. 1;
Fig. 6 is a flowchart illustrating processing performed by a comprehensive diagnosis unit of the server in the machine component diagnosis system shown in Fig. 1;
Fig. 7 is a block diagram illustrating a schematic configuration of a machine component diagnosis system according to a second embodiment of the present invention;
Fig. 8 is a block diagram illustrating a schematic configuration of a machine component diagnosis system according to a first reference mode which is not included in the scope of the present invention;
Fig. 9 is a block diagram illustrating a schematic configuration of a machine component diagnosis system according to a third embodiment of the present invention;
Fig. 10 is a block diagram illustrating a schematic configuration of the machine component diagnosis system shown in Fig. 9, in a viewpoint different from that of Fig. 9;
Fig. 11 is a diagram illustrating a schematic configuration of a machine component diagnosis system according to a fourth embodiment of the present invention;
Fig. 12 is a perspective view illustrating an alternative example of a connection mode of a sensor in the diagnosis system shown in Fig. 11;
Fig. 13 is a block diagram illustrating a schematic configuration of an AE-based diagnosis unit of a server in the machine component diagnosis system shown in Fig. 11;
Fig. 14 is a flowchart illustrating processing performed by a comprehensive diagnosis unit of the server in the machine component diagnosis system shown in Fig. 11;
Fig. 15 is a block diagram illustrating a schematic configuration of a machine component diagnosis system according to a fifth embodiment of the present invention;
Fig. 16 is a block diagram illustrating a schematic configuration of a machine component diagnosis system according to a second reference mode which is not included in the scope of the present invention;
Fig. 17 is a block diagram illustrating a schematic configuration of a machine component diagnosis system according to a sixth embodiment of the present invention; and
Fig. 18 is a block diagram illustrating a schematic configuration of the machine component diagnosis system shown in Fig. 17, from a viewpoint different from that of Fig. 17.

### DESCRIPTION OF EMBODIMENTS

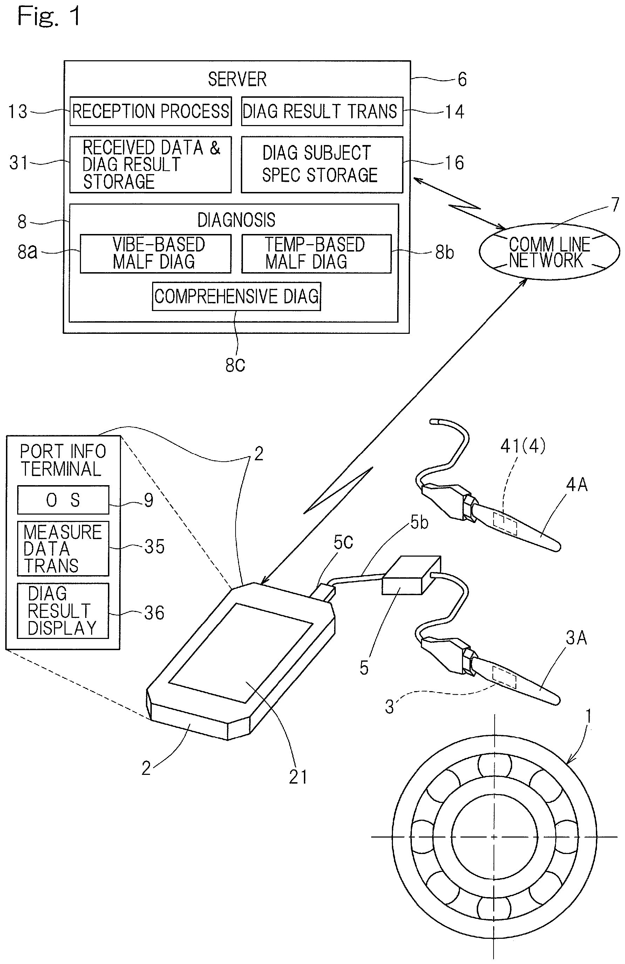

A machine component diagnosis system according to a first embodiment of the present invention will be described with reference to Figs. 1 to 6. This machine component diagnosis system is configured to inspect a diagnosis subject 1 such as a rotary machine component, and includes: a general-purpose portable information terminal 2; a vibration sensor 3 that measures the diagnosis subject 1; a temperature sensor 41 as an additional sensor 4; an A/D converter 5; and a server 6 connected to the portable information terminal 2 via a communication line network 7 such as the Internet. The diagnosis subject 1 is, for example, a machine component including a rolling element 1a such as a rolling bearing, a constant velocity ball joint, or the like. In this embodiment, since the additional sensor 4 is the temperature sensor 41, the temperature sensor 41 measures temperature which is one characteristic of the diagnosis subject.

The portable information terminal 2 includes a smartphone, a tablet, or the like, and may not necessarily have a telephone function, but is an information processing device that is connectable to the server 6 via the wide-area communication line network 7 such as a telephone network, the Internet, or the like and includes: an OS (operation program) 9 that is able to download and install an application program; and a screen display device 21 that displays an image, such as a liquid crystal display unit. In the above definition of the portable information terminal, the smartphone refers to a portable information terminal having a telephone function. The communication line network 7 includes a line network through which mobile communication can be performed.

The portable information terminal 2 includes: a measurement data transmission module 35 that transmits, to the server 6, acceleration data representing acceleration of vibration measured by the vibration sensor 3, and temperature data (characteristic data) regarding temperature measured by the temperature sensor 4; and a diagnosis result display module 36 that causes the screen display device 21 to display a diagnosis result sent back from the server 6 in response to the transmitted measurement data (acceleration data and temperature data).

The vibration sensor 3 is configured to measure acceleration of vibration, and is housed in a pickup 3A. The temperature sensor 41 is housed in a pickup 4A different from that for the vibration sensor 3. The vibration sensor 3 and the temperature sensor 41 are exchangeably connected to the A/D converter 5. That is, at a point in time, only one of the vibration sensor 3 and the temperature sensor 41 is connectable to the A/D converter 5. Acceleration data, which represents a vibration waveform of an analog signal measured by the vibration sensor 3 and outputted as a voltage value, is converted into digital data by the A/D converter 5 and taken in the portable information terminal 2. Temperature data in the form of an analog signal outputted as a voltage value corresponding to the temperature measured by the temperature sensor 41 is also converted into digital data by the A/D converter 5 and taken in the portable information terminal 2. The A/D converter 5 is insertable to the portable information terminal 2 by a cable 5b having a terminal 5c that conforms to a standard such as micro USB (one of USB standards as connection interface standards).

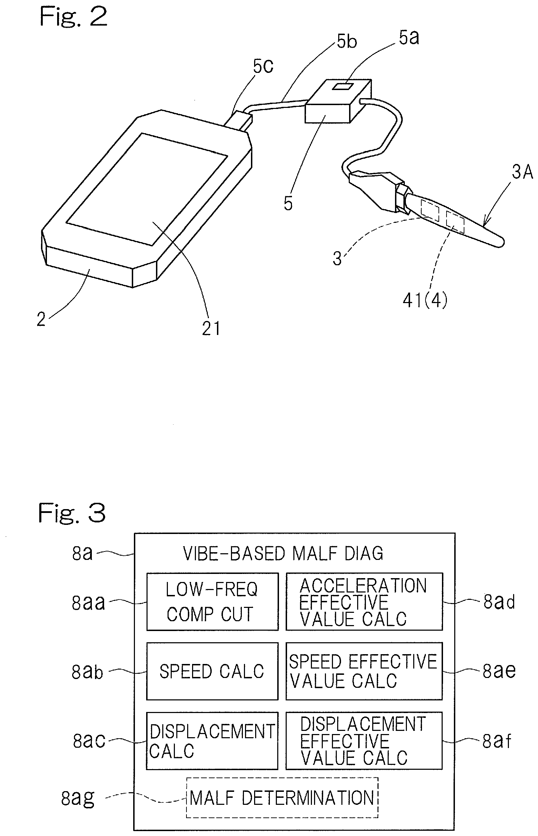

The vibration sensor 3 and the temperature sensor 41 may be housed in a common pickup 3A as shown in an alternative example of Fig. 2. In this case, either the acceleration data or the temperature data may be selected to be taken in the measurement data transmission module 35 by a switching operation of a changeover switch 5a provided in the A/D converter 5 or by the measurement data transmission module 35, of the portable information terminal 2, having a switching function. The A/D converter 5 shown in Fig. 1 may be composed of two A/D converters 5, and the two A/D converters 5 may be provided in housings in which the pickups 3A and 4A are provided, respectively. The A/D converter 5 shown in Fig. 2 may be provided in a housing in which the pickup 3A is provided.

Referring back to Fig. 1, the output from the A/D converter 5 connected to the vibration sensor 3 or the temperature sensor 41 may be taken in the portable information terminal 2 via a wireless LAN or the like. Alternatively, an attachable/detachable storage medium (not shown) such as a memory chip, a USB memory or the like may be detachably attached to the portable information terminal 2, and data may be supplied to the portable information terminal 2 via the storage medium.

The server 6 includes: a reception processing module 13 that receives measurement data transmitted from the portable information terminal 2, the measurement data including acceleration data measured within a certain period of time and temperature data measured within a period of time different from the certain period of time; a diagnosis module 8 that diagnoses malfunction of the diagnosis subject 1 on the basis of the acceleration data and the temperature data; and a diagnosis result transmission module 14 that sends a diagnosis result of the diagnosis module 8 back to the information terminal. The server 6 further includes: a received data and diagnosis result storage 31 that stores therein various data received by the reception processing module 13 and the diagnosis results obtained by the diagnosis module 8; and a diagnosis subject specification storage 16 as a database in which specifications of various diagnosis subjects 1, for example, specification of a bearing, are stored.

The diagnosis module 8 includes: a vibration-based malfunction diagnosis unit 8a that diagnoses malfunction of the diagnosis subject 1 on the basis of the acceleration data; a temperature-based malfunction diagnosis unit 8b that diagnoses malfunction of the diagnosis subject 1 on the basis of the temperature data; and a comprehensive diagnosis unit 8c that finally diagnoses malfunction of the diagnosis subject 1 by using the diagnosis results of the vibration-based malfunction diagnosis unit 8a and the temperature-based malfunction diagnosis unit 8b. The comprehensive diagnosis unit 8c necessarily determines that malfunction has occurred in the diagnosis subject 1 when either the vibration-based malfunction diagnosis unit 8a or the temperature-based malfunction diagnosis unit 8b has determined that malfunction has occurred.

Fig. 3 shows a specific example of the vibration-based malfunction diagnosis unit 8a. The vibration-based malfunction diagnosis unit 8a includes: a speed calculation section 8ab that integrates acceleration data as the measurement data to obtain a speed; and a displacement calculation section 8ac that integrates the speed obtained by the speed calculation section 8ab, to obtain a displacement. The vibration-based malfunction diagnosis unit 8a includes, at a stage prior to the speed calculation section 8ab, a low-frequency component cutting section 8aa that cuts off a low-frequency component from the acceleration data as the measurement data. Further, the vibration-based malfunction diagnosis unit 8a includes an acceleration effective value calculation section 8ad, a speed effective value calculation section 8ae, and a displacement effective value calculation section 8af. In addition, the vibration-based malfunction diagnosis unit 8a includes, at a stage subsequent to the displacement calculation section 8ac, a malfunction determination section 8ag that diagnoses malfunction of the diagnosis subject 1.

The low-frequency component cutting section 8aa is configured to perform processing of performing, for example, frequency analysis for the acceleration data, cutting off a low frequency component from the result of the frequency analysis, and restoring the frequency analysis result, from which the low frequency component has been cut off, into acceleration data composed of time-based data. The low-frequency component cutting section 8aa may be a low-cut filter.

The acceleration effective value calculation section 8ad calculates an effective value (also referred to as "RMS (Root Mean Square) value") of a vibration waveform of acceleration from the acceleration data. The acceleration data used for the calculation may be data at a stage prior to the low-frequency component cutting section 8aa, or may be data at a stage subsequent to the low-frequency component cutting section 8aa, from which a low-frequency component has been cut off.

The speed effective value calculation section 8ae calculates an effective value of a vibration waveform of the speed calculated by the speed calculation section 8ab. The displacement effective value calculation section 8af calculates an effective value of a vibration waveform of the displacement calculated by the displacement calculation section 8ac.

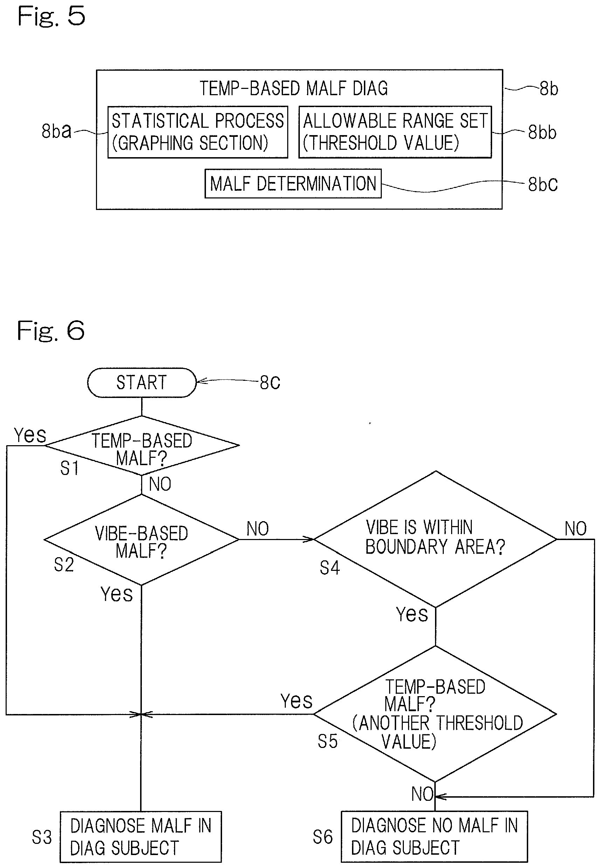

Fig. 5 shows a specific example of the temperature-based malfunction diagnosis unit 8b. In this embodiment, the temperature-based malfunction diagnosis unit 8b includes: a statistical processing section 8ba that stores the received temperature data for each diagnosis subject 1, and performs statistical processes such as graphing, average value calculation, and the like; an allowable range setting section 8bb that sets an allowable range of temperature for each type of a diagnosis subject 1 by means of a threshold value or the like; and a malfunction determination section 8bc that compares the received temperature data with the allowable range set by the allowable range setting section 8bb to determine whether or not malfunction has occurred in the diagnosis subject 1. In addition to determining presence/absence of malfunction by comparing the current temperature of the diagnosis subject 1 with the allowable range, the malfunction determination section 8bc may determine presence/absence of malfunction by comparing a statistical processing result based on the temperature data with an allowable range corresponding to the processing.

Fig. 6 shows an example of processing performed by the comprehensive diagnosis section 8c (Fig. 1). The temperature-based malfunction diagnosis unit 8b determines whether or not malfunction has occurred (S1). When it is determined that temperature-based malfunction has occurred, it is diagnosed that malfunction has occurred in the diagnosis subject 1 (S3). When no temperature-based malfunction has occurred, the vibration-based malfunction diagnosis unit 8a determines whether or not malfunction has occurred (S2). When it is determined that vibration-based malfunction has occurred, it is diagnosed that malfunction has occurred in the diagnosis subject 1 (S3).

When no vibration-based malfunction has occurred, it is determined whether or not the degree of vibration (the rate of vibration) falls within a boundary range, that is, whether or not the degree of vibration falls within a range in which it is difficult to definitely diagnose that malfunction has occurred, based on only the vibration, even though it has not been determined that vibration-based malfunction is occurred (S4). If the degree of vibration does not fall within the boundary range, it is diagnosed that no malfunction has occurred in the diagnosis subject 1 (S6). If the degree of vibration falls within the boundary range, it is determined whether or not the measured temperature is higher than a threshold value that is lower than the threshold value at the previous determination (S1) for temperature-based malfunction, i.e., lower than the ordinary or regular threshold value (S5). If the temperature is lower than the threshold value, it is diagnosed that no malfunction has occurred in the diagnosis subject 11 (S6). If the temperature is higher than the threshold value, it is diagnosed that malfunction has occurred in the diagnosis subject 1 (S3). In this way, even when it is difficult to definitely determine, from only the vibration, whether or not malfunction has occurred, malfunction diagnosis can be accurately performed by also using the temperature-based diagnosis. The boundary range extends from a lower-limit vibration value to an upper-limit vibration value. These upper-limit and lower-limit vibration values may be selected by an administrator, or may be automatically set during operation.

The diagnosis result sending-back module 14 shown in Fig. 1 sends the diagnosis result obtained by the diagnosis module 8 as described above back to the portable information terminal 2. In this case, the speed, the displacement, the acceleration effective value, the speed effective value, and the displacement effective value, which have been obtained by the vibration-based malfunction diagnosis unit 8a, are also sent back to the portable information terminal 2.

According to the machine component diagnosis system configured as described above, the data measured for the diagnosis subject 1 is sent from the portable information terminal 2 to the server 6, and the server 6 performs malfunction diagnosis. Therefore, accurate malfunction diagnosis can be performed by utilizing excellent processing performance of the server 6. In this case, it may sometimes be difficult to determine whether or not malfunction has occurred, based on only the acceleration data measured by the vibration sensor 3. However, in the above configuration, temperature is measured in addition to vibration, and information of the temperature is also used for malfunction diagnosis, whereby diagnosis accuracy is enhanced.

For example, there are cases where the acceleration data falls within a boundary range, that is, within a range in which it is difficult to determine whether or not malfunction has occurred. Under such a difficult situation, final determination that malfunction has occurred is made when it is determined, on the basis of the temperature data, that malfunction has occurred, whereby malfunction diagnosis can be accurately performed. When the temperature indicates malfunction, it is possible to diagnose that malfunction has occurred, based on only the temperature. However, there are many cases where malfunction has occurred even when the temperature falls within a normal range. In addition, it is difficult to specify a malfunctioning part or area of a diagnosis subject on the basis of the temperature alone. In these cases, if the acceleration data obtained by the vibration sensor 3 is used for malfunction diagnosis in addition to the temperature data, diagnosis of early malfunction can be performed, and a malfunctioning part or area can be specified by frequency analysis or the like.

In particular, when the diagnosis subject 1 includes a rotary machine component such as a rolling bearing, more accurate malfunction diagnosis is realized by performing diagnosis using not only the acceleration data of vibration but also the temperature.

In the present embodiment, the portable information terminal 2 includes a general-purpose portable information terminal having an OS 9 capable of installing an application program, and the measurement data transmission module 35 and the diagnosis result display module 36 are implemented in the portable information terminal 2 when terminal processing software 33 as the application program is installed. Therefore, by only preparing the vibration sensor 3, the temperature sensor 41, and the A/D converter 5, it is possible to perform malfunction presence/absence diagnosis on the basis of not only acceleration of vibration but also temperature, by using the popularized portable information terminal 2 such as a smartphone, a tablet, or the like.

The vibration sensor 3 and the temperature sensor 41 may be provided in the dedicated pickups 3A and 4A, respectively, and the pickups 3A and 4A may be exchangeably connected to the A/D converter 5. In this case, the A/D converter 5 can be shared by vibration measurement and temperature measurement. As shown in Fig. 2, the vibration sensor 3 and the temperature sensor 41 may be provided in the common pickup 3A. In this case, since the vibration sensor 3 and the temperature sensor 41 are arranged together, handling and storage are facilitated.

The diagnosis module 8 in the server 6 includes the vibration-based malfunction diagnosis unit 8a and the temperature-based malfunction diagnosis unit 8b. When at least one of the vibration-based malfunction diagnosis unit 8a and the temperature-based malfunction diagnosis unit 8b determines that malfunction has occurred, it is diagnosed that malfunction has occurred in the diagnosis subject 1. Therefore, malfunction diagnosis is not likely to fail. There are cases where the acceleration data falls within a boundary range, that is, within a range in which it is difficult to determine whether or not malfunction has occurred. Under such a difficult situation, final determination that malfunction has occurred is made when it is determined, on the basis of the temperature data, that malfunction has occurred, whereby malfunction diagnosis can be performed more accurately.

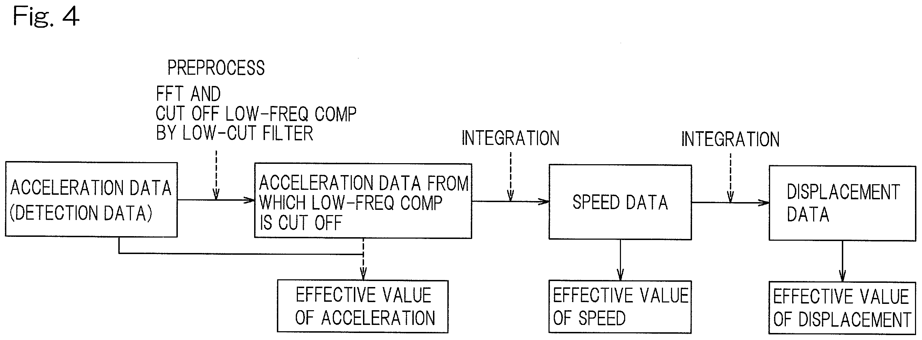

The function of the vibration-based malfunction diagnosis unit 8a according to the present embodiment will be specifically described. In this example, a low frequency component is cut off from the acceleration data by the low-frequency component cutting section 8aa (see Fig. 3). As shown in Fig. 4, the acceleration data from which the low frequency component has been cut off is integrated, whereby speed data is obtained. Thus obtained speed data is further integrated, whereby displacement data is obtained. In this case, since the low-frequency component is cut off from the acceleration data, when the speed and the displacement are obtained by integration from the acceleration, calculation can be performed without occurrence of divergence. Therefore, the speed and the displacement can be reliably calculated.

The low-frequency component cutting section 8aa cuts off the low frequency component by using a low-cut filter or frequency analysis. In the case of using the low-cut filter, the structure of the low-frequency component cutting section is simplified. In the case where the low-frequency component cutting section is configured to perform processing of performing frequency analysis of the acceleration data, cutting off a low-frequency component from the result of the frequency analysis, and restoring the frequency analysis result, from which the low-frequency component has been cut off, into acceleration data composed of time-based data, the low-frequency component can be reliably and appropriately cut off.

Since the diagnosis result transmission module 14 in the server 6 sends the speed and the displacement of vibration obtained by the diagnosis module 8 back to the portable information terminal 2, the vibration sensor 3, connected to the portable information terminal 2, appears to be a vibration sensor having a dedicated IC for calculation, although having no such a dedicated IC. Therefore, it is possible to recognize not only the acceleration of vibration but also the speed and the displacement of vibration at the site of vibration measurement. In the present embodiment, in addition to the acceleration, the speed, and the displacement, an effective value of the acceleration of vibration, an effective value of the speed of vibration, and an effective value of the displacement of vibration are also calculated in the server 6 and transmitted to the portable information terminal 2. Therefore, by using only the vibration sensor 3 capable of measuring the acceleration of vibration and the portable information terminal 2, various data to be used for diagnosis of diagnosis subjects such as a rotary machine component can be obtained, thereby realizing highly accurate malfunction diagnosis.

When the diagnosis result transmission module 14 is configured to transmit the statistical processing result of the temperature data, the temperature can also be precisely recognized in the portable information terminal 2.

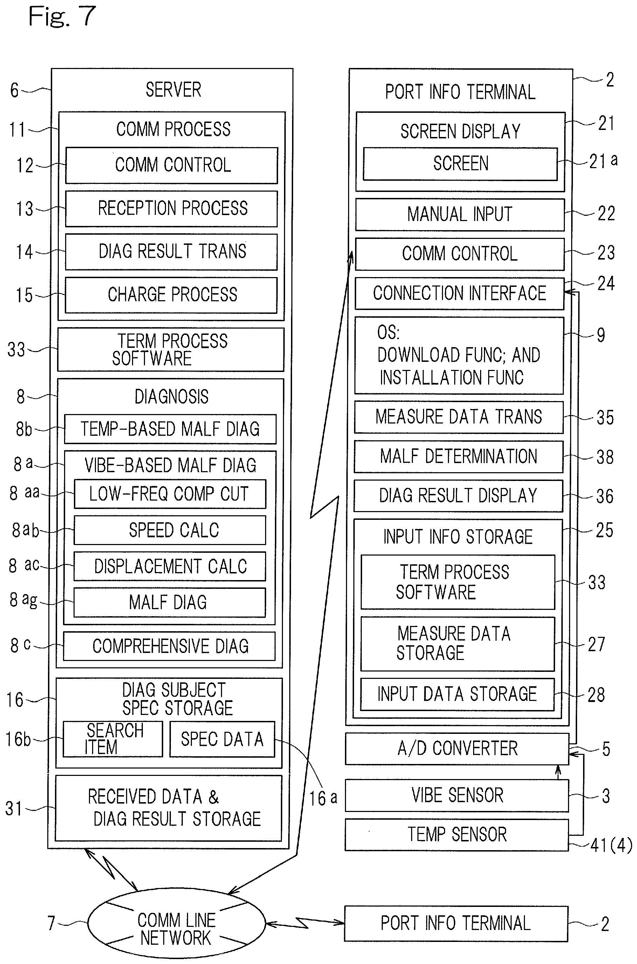

Fig. 7 shows a machine component diagnosis system according to a second embodiment of the present invention. In this embodiment, components, except for components particularly described below, are designated by the same reference numerals as those of the first embodiment, and the description thereof is omitted. Further, in this embodiment, specific matters, for which description is omitted in the first embodiment, will be described.

In this embodiment, the server 6 includes: a communication processing module 11; a storage (not shown) having stored therein data processing software that constitutes the diagnosis module 8; a storage (not shown) having stored therein terminal processing software 33 as a diagnosis support program, that is, the program 33 to be downloaded to the portable information terminal 2; a diagnosis subject specification storage 16 as a database for specifications of the diagnosis subject 1 such as a bearing; and a received data and diagnosis result storage 31.

The communication processing module 11 includes a communication control module 12, a reception processing module 13, a diagnosis result sending-back module 14, and a charging processing module 15. The communication control module 12 is configured to respond to access from the portable information terminal 2 via the communication line network 7, establish communication therewith, and perform various controls regarding the communication. The reception processing module 13 is configured to cause the diagnosis module 8 to perform data processing in response to a request for data processing from the portable information terminal 2, and transmit the terminal processing software 33 to the portable information terminal 2. The diagnosis result transmission module 14 is configured to send the result of diagnosis performed by the diagnosis module 8 back to the portable information terminal 2. The charging processing module 15 is configured to charge for the processing by the diagnosis module 8 from the portable information terminal 2. The method for charging may be configured to charge for each use of the diagnosis module 8, to change a fixed fee, or to charge for download of the terminal processing software 33.

Although the diagnosis module 8 is similar to that according to the first embodiment described with reference to Fig. 1, the effective value calculation sections in the vibration-based malfunction diagnosis unit 8a are not illustrated in Fig. 7. The data processing software for the diagnosis module 8 is configured by a program and data that cause the server 6 to perform data processing for diagnosis of the diagnosis subject 1. This program includes an application program to be executed on an OS (operation program) of the server 6. The malfunction determination section 8ag in the vibration-based malfunction diagnosis unit 8a of the diagnosis module 8 is configured to, for example, perform frequency analysis (FFT analysis) of vibration data of a bearing and measure a vibration level (acceleration data) of the vibration frequency of each part (e.g., an inner ring, an outer ring, a rolling element, a retainer) of the bearing on the basis of the FFT analysis result. These measured vibration levels are compared to threshold values corresponding to the respective vibration levels. In a part at which the vibration level exceeds the threshold value, it is determined that malfunction has occurred. The malfunction determination section 8ag has a function to cause the following processing to be performed via the diagnosis result transmission module 14. In the processing, upon determining that malfunction has occurred in at least one part, the malfunction determination section 8ag displays that the malfunction has occurred, on a screen 21a of the portable information terminal 2. If all the detected vibration levels are less than the threshold values, the malfunction determination section 8ag determines that no malfunction has occurred, and displays that no malfunction has occurred, on the screen 21 a.

In performing the malfunction determination, the malfunction determination section 8ag may determine that malfunction has occurred, if a condition determined on the basis of comparison of time-sequential processing results is met even when the vibration level is equal to or less than the threshold value, and may display the determination result on the screen 21a of the portable information terminal 2.

The diagnosis subject specification storage 16 as a database includes: a database management system (not shown) that is searchable through access from the portable information terminal 2; and a data storage. In the case where the diagnosis subject 1 includes a bearing, the diagnosis subject specification storage 16 stores names hierarchically classifying the bearing as a search item 16. The search item 16b is classified into: a level classified into ball bearing and roller bearing in which ball bearing is classified into deep groove ball bearing, angular contact ball bearing, and other types of bearings, and roller bearing is classified into taper roller bearing, cylindrical roller bearing, and other types of bearings; a level classified by size; and a level classified by presence/absence of a seal and a seal type. The search item 16b may have a plurality of types of levels having different forms of classification. Specification data 16a associated with one model number in the lowest level is provided as a file. The diagnosis subject specification storage 16 allows a plurality of specification data 16a to be extracted as a folder with various levels.

In the case where the diagnosis subject includes a rolling bearing, the specification data 16a associated therewith includes, for example, the number of balls, the ball diameter, the dimensions of an inner ring and an outer ring, and the like. A model number of the diagnosis subject 1 includes a number for the diagnosis subject that is determined for each specification associated with the diagnosis subject 1, or a number determined for each diagnosis subject. In the case where the diagnosis subject 1 includes a bearing, a number referred to a bearing name or a bearing number (bearing designation), or a production number may be used as the model number.

The received data and diagnosis result storage 31 is configured to store the result of the processing performed by the diagnosis module 8, for example, the diagnosis results obtained by the temperature-based malfunction diagnosis unit 8b, the vibration-based malfunction diagnosis unit 8a, and the comprehensive diagnosis unit 8c, respectively. While the diagnosis result obtained by the comprehensive diagnosis unit 8c is necessarily stored in the received data and diagnosis result storage 31, the diagnosis results obtained by the temperature-based malfunction diagnosis unit 8b and/or the vibration-based malfunction diagnosis unit 8a are not necessarily stored therein. The received data and diagnosis result storage 31 is provided, for example, as a database, and is configured to store the specification data 16a processed by the diagnosis module 8 and the measurement data obtained from the vibration sensor 3 and the temperature sensor 41, together with identification data and the like of the portable information terminal 2. In addition, the diagnosis module 8 may have a function to compare a plurality of the diagnosis results, a function to cause the diagnosis result to be stored in the received data and diagnosis result storage 31 of the server 6, and a function to search the received data and diagnosis result storage 31 with an appropriate search condition and download the stored diagnosis result. The plurality of the diagnosis results from portable information terminals may be compared using the above comparison function. By comparing the plurality of the diagnosis results, it is possible to perform more appropriate inspection and evaluation of an inspection result, that is, malfunction diagnosis.

The terminal processing software 33 is used in the portable information terminal 2. For that purpose, the terminal processing software 33 is transmitted to the portable information terminal 2 by the reception processing module 13 in response to a transmission request from the portable information terminal 2.

The terminal processing software 33 is configured to: transmit the measurement data that is obtained from the vibration sensor 3 and the temperature sensor 41 and inputted to the portable information terminal 2, to the server 6; cause the server 6 to perform data processing; and the like. The terminal processing software 33 is configured to be installed in the portable information terminal 2, that is, to be made executable in the portable information terminal 2, whereby the measurement data transmission module 35, the diagnosis result display module 36, and the malfunction determination module 38 are implemented in the portable information terminal 2.

The configuration of the portable information terminal 2 will be specifically described. The portable information terminal 2 includes a smartphone, a tablet, or the like as described above, and includes the OS 9 that is able to download and install the above-described application program, a screen display device 21, a manual input module 22, a communication control module 23, connection interface 24, and an input information storage 25.

The screen display device 21 is configured to display an image on the screen 21a such as a liquid crystal display. The manual input module 22 is configured for an operator to manually perform an input (an interface for an input by the operator), and includes a hardware keyboard for inputting characters and numbers, a software keyboard (touch panel) that enables an input to be performed by a finger, a touch pen, or the like touching the screen 21a, or the like. The communication control module 23 is configured to perform communication with the server 6 via the communication line network 7 and perform various processing. The connection interface 24 is configured to connect the portable information terminal 2 to another apparatus. In this example, the connection interface 24 includes an insertion-connection terminal complying with the micro USB standard, and a circuit and software for input/output processing thereof.

Input information storage 25 is configured to store measurement data representing the vibration sensor 3 and the temperature sensor 41, inputted via the server 6, the manual input module 22, or the connection interface 24. The terminal processing software 33 is inputted and installed in input information storage 25 so as to be executable. The specification data 16a downloaded from the server 6 is stored in input information storage 25 as a specification data group including a folder which a hierarchical structure. The measurement data obtained from the vibration sensor 3 and the temperature sensor 41 is stored in a measurement data storage section 27 of input information storage 25. Various data inputted from the manual input module 22, such as a bearing rotational speed, is stored in an input data storage section 28.

When the terminal processing software 33 is downloaded and installed into the portable information terminal 2, the measurement data transmission module 35, the malfunction determination module 38, and the diagnosis result display module 36 are implemented.

The measurement data transmission module 35 is configured to transmit, to the server 6, the measurement data that is obtained in the vibration sensor 3 and the temperature sensor 41 and captured by the portable information terminal 2.

A diagnosis method using the machine component diagnosis system according to the present embodiment will be described. First, as a preparing process, the portable information terminal 2 requests the server 6 to transmit the terminal processing software 33 thereto. In response to the transmission request, the server 6 transmits the terminal processing software 33 to the portable information terminal 2. The portable information terminal 2 installs the downloaded terminal processing software 33 to make the terminal processing software 33 executable.

In diagnosis, the measurement data inputted from the vibration sensor 3 and the temperature sensor 41 to the portable information terminal 2, the model number of the diagnosis subject 1 inputted from the manual input module 22 or the like, and data of rotation frequencies (that is, rotation speeds) at measurement by the vibration sensor 3 and at measurement by the temperature sensor 41 in the diagnosis subject 1, are transmitted from the portable information terminal 2 to the server 6. If the measurement period by the vibration sensor 3 and/or the measurement period by the temperature sensor 41 are short, data of the rotation frequency at measurement by only one of the vibration sensor 3 and the temperature sensor 41 may be transmitted. The data of the rotation frequency may be inputted from the manual input module 22, or may be obtained from a rotation detector (not shown).

The server 6 processes the received measurement data with the diagnosis module 8 by using the specification data 16a associated with each model number and the rotation frequency, and sends the diagnosis result back to the portable information terminal 2 by the diagnosis result sending-back module 14. Specifically, the server 6 sends the speed, the displacement, the acceleration effective value, the speed effective value, and the displacement effective value, which have been obtained by the vibration-based malfunction diagnosis unit 8a of the diagnosis module 8, back to the portable information terminal 2.

For example, the server 6 determines presence/absence of malfunction in each part of the diagnosis subject 1 (an inner ring, an outer ring, a rolling element, a retainer, etc. in the case of a rolling bearing), and sends back the result of presence/absence of malfunction in each part, as a diagnosis result. The portable information terminal 2 displays the sent-back diagnosis result on the screen 21a. For example, the diagnosis result is displayed by using a pictogram or a symbol representing each part such as the inner ring, the outer ring, the rolling element, and the retainer, and characters or a symbol notifying presence/absence of malfunction. In a specific example, "inner ring: ∘ (pass), outer ring: ∘ (pass), rolling element: ∘ (pass), and retainer: x (fail)" is displayed.

In the method of performing the data processing by the server 6, the plurality of diagnosis results obtained by the diagnosis module 8 may be stored in the portable information terminal 2 so as to be compared to each other. This comparison of the diagnosis results is performed with the terminal processing software 33.

Further, in the method of performing the data processing by the server 6, numerical data may be obtained as a processing result of the data processing. If the numerical data exceeds a threshold value determined for each model number or if a condition determined on the basis of comparison of time-sequential processing results is met even when the numerical data falls within the threshold value, it may be determined that malfunction has occurred, and the diagnosis result display module 36 or the like may be caused to display the result of the determination on the screen of the portable information terminal 2.

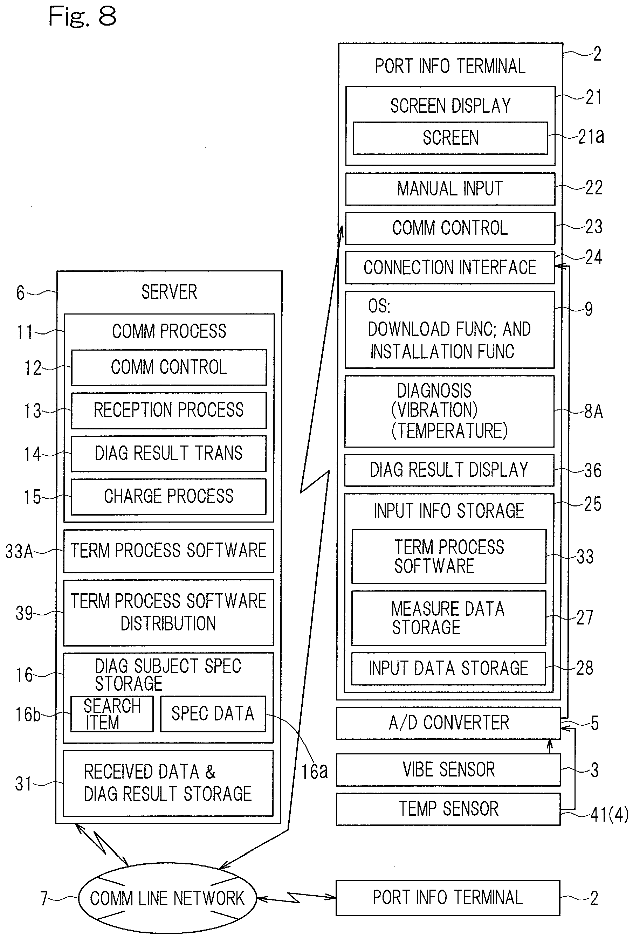

Fig. 8 shows a machine component diagnosis system according to a first reference mode which is not included in the scope of the present invention. In this reference mode, as shown in Fig. 8, the diagnosis module 8A provided in the portable information terminal 2 is caused to perform the processing of the diagnosis module 8 in the second embodiment shown in Fig. 7. The diagnosis module 8A determines presence/absence of malfunction in the diagnosis subject 1 on the basis of the acceleration data obtained after measurement of vibration of the diagnosis subject 1 with the vibration sensor 3, and the temperature data obtained by measurement of temperature of the diagnosis subject 1 with the temperature sensor 41. Similarly to the embodiment shown in Fig. 1, the diagnosis module 8A of the information terminal 2 includes a vibration-based malfunction diagnosis unit 8a, a temperature-based malfunction diagnosis unit 8b, and a comprehensive diagnosis unit 8c, although illustration thereof is omitted. The diagnosis module 8A is implemented when terminal processing software 33A distributed from a terminal processing software distribution module 39 of the server 6 is downloaded and installed in the information terminal 2. The terminal processing software 33A according to the reference mode has a function of diagnosis, in contrast to the terminal processing software 33 shown in Fig. 7.

In the case of the above configuration, the portable information terminal 2 is allowed to perform measurement of vibration data, measurement of temperature data, determination of malfunction by analyzing the measurement data, and display of the diagnosis result. Since malfunction diagnosis is performed by the portable information terminal 2, it is difficult to achieve diagnosis accuracy equivalent to accuracy of calculation for malfunction diagnosis performed in the server 6, and the diagnosis takes time. However, practical diagnosis accuracy will be achieved with increase in the operating speed of the information terminal 2, increase in the storage capacity thereof, and the like in recent years or in future. The portable information terminal 2 configured to perform the processes up to diagnosis allows a user to perform malfunction diagnosis easily.

While the portable information terminal 2 is used in the respective embodiments described above, not a portable type but a stationary type information terminal (not shown) may be used. The information terminal may be placed in contact with, or in the vicinity of, or apart from the diagnosis subject 1. When the information terminal is placed in contact with or in the vicinity of the diagnosis subject 1, the vibration sensor 3, the temperature sensor 41, and the A/D converter 5 may be disposed in a housing in which the information terminal is disposed.

Figs. 9 and 10 show a machine component diagnosis system according a third embodiment of the present invention. This system is applied to diagnosis of a plurality of diagnosis subjects 1. This system includes a plurality of information terminals 2A. The respective information terminals 2A are provided so as to correspond to the plurality of diagnosis subjects 1. This system further includes a result display terminal 2B, and the result display terminal 2B is configured to display the diagnosis results of the plurality of diagnosis subjects 1. Further, in this embodiment, each diagnosis subject 1 is periodically monitored. Each measurement terminal 2A includes a so-called measurement unit with communication functions.

This machine component diagnosis system is provided with the plurality of measurement information terminals 2A, the result display information terminal 2B, and a server 6 which are connected to each other via a wide-area communication line network 7, and causes the server 6 to perform malfunction diagnosis of the diagnosis subjects 1 that are machine components. Each of the plurality of measurement information terminals 2A includes: a vibration sensor 3 and a temperature sensor 41 that measure vibration and temperature of the corresponding diagnosis subject 1, respectively; an A/D converter 5 that performs A/D conversion on acceleration data and temperature data obtained by measurements by the vibration sensor 3 and the temperature sensor 41, respectively; and an information processing module 2Aa that captures the A/D converted acceleration data and temperature data, and transmits these data to the server 6.

As shown in Fig. 10, the result display information terminal 2B includes: a diagnosis result display module 36 that displays each diagnosis result transmitted from the server 6; a measurement instruction module 54; and a diagnosis condition instruction module 55.

The server 6 includes: a reception processing module 13 that receives the acceleration data and the temperature data transmitted from the measurement information terminal 2A; a diagnosis module 8 that diagnoses malfunction in the diagnosis subject 1 on the basis of the received acceleration data and the temperature data; and a diagnosis result transmission module 14 that transmits a diagnosis result of the diagnosis module 8 to the result display information terminal 2B.

Specifically, the diagnosis subject 1 includes a machine component such as a bearing, a motor, or the like, and is, for example, a main shaft bearing or the like of a machine tool. The diagnosis subject 1 may be a main shaft bearing of a wind power generator, a bearing for supporting nacelle turning, a bearing of a speed increaser, a gear transmission part of a speed increaser, or the like.

In the embodiment shown in Fig. 9, the plurality of measurement information terminals 2A are connected to a communication control device 31 composed of a router, a modem, and the like via a common LAN (Local Area Network), and are connected to the communication line network 7 formed by the Internet via the communication control device 31. The LAN may be a wired type or a wireless type, or may be formed by combination of a wired configuration and a wireless configuration. The communication control device 31 is not limited to a stationary router and a stationary modem provided independently, but may be a portable communication terminal which performs wireless communication with each measurement information terminal 2A through WiFi or the like, and mobile communication, i.e., so-called portable communication with the communication line network 7. The portable communication terminal as the communication control device 31 may be, besides a terminal dedicated for data communication, a mobile phone such as a smartphone having a function of performing wireless communication with each measurement information terminal 2A by Bluetooth or the like and performing mobile communication with the communication line network 7. The plurality of measurement information terminals 2A connected via the LAN are used for measuring the diagnosis subjects 1 placed in one factory or a common site, for example. In Fig. 9, one set of such multiple measurement information terminals 2A connected via the LAN are shown. However, multiple sets of the measurement information terminals 2A may be connected to the communication line network 7. Alternatively, the measurement information terminal 2A may be solely connected to the communication line network 7.

As shown in Fig. 10, the vibration sensor 3 and the temperature sensor 41 are connected to each measurement information terminal 2A via the A/D converter 5. Each measurement information terminal 2A includes the information processing module 2Aa, a communication device 38, and a power supply device 39. The measurement data of the vibration sensor 3 and the measurement data of the temperature sensor 41 are switched and inputted by a switching means provided in the information processing module 2Aa, for example. The communication device 38 is configured to be connected to the communication line network 7.

The information processing module 2Aa is formed by a microcomputer or the like, and includes a measurement control module 40, a measurement data transmission module 35, and a storage 59.

The measurement control module 40 is configured to cause the vibration sensor 3 and the temperature sensor 41 to perform measurement in every measurement cycle that is set, and is able to change measurement conditions including the measurement cycle on the basis of measurement condition instruction information F1. In this example, the measurement condition instruction information F1 includes the measurement cycle, a monitoring start instruction for starting measurement, and a given time measurement instruction for performing measurement at a given time other than the measurement cycle. Any measurement cycle may be chosen. For example, the measurement cycle is set to several minutes, several hours, or one day. A period during which one measurement is continued may be a constant period set in the measurement control module 40 or the like, or the measurement continuation period may also be included in the measurement condition instruction information F1.

For example, the measurement control module 40 may include a timer (not shown), and may be configured as follows. That is, the measurement control module 40 is normally in a sleep state, and when a set condition is met, the measurement control module 40 is automatically started to cause the vibration sensor 3 and the temperature sensor 41 to perform measurement and cause the measurement data transmission module 35 to transfer measurement data to the server 6 as the diagnosis device, and then goes into a sleep state again.

The measurement data transmission module 35 performs processing of: transmitting the measurement data, i.e., the acceleration data and the temperature data measured by the vibration sensor 3 and the temperature sensor 41, respectively, and then A/D converted by A/D converter 5, via the communication device 38 to the server 6; and receiving, by the communication module 38, the measurement condition instruction information F1 transmitted from the result display information terminal 2B and forwarding the measurement condition instruction information F1 to the measurement control module 40. The measurement data transmission module 35 transmits the measurement data with identification information added thereto, which includes an ID stored in the storage 52. The transmission of measurement information by the measurement data transmission module 35 may be performed every time the measurement is performed, or may be performed in response to a request signal from the server 6 or the result display information terminal 2B. The identification information ID is information for identifying the diagnosis subject 1, and is also information for identifying the measurement information terminal 2A.

The storage 59 stores therein the identification information ID and measurement information ID. In the case where information stored by the vibration sensor 3 and the temperature sensor 41 is stored so as to be transmitted as necessary, the storage 59 is also used for such storage of the measurement data.

The server 6 formed by a computer, functioning as a diagnosis device, and includes a communication device 44 configured to perform communication with the communication line network 7, and an information processing module 45. The information processing module 45 includes a reception processing module 13, a diagnosis module 8, a diagnosis result transmission module 14, a storage 50, and a diagnosis condition change module 49. Except the storage 50, all of the modules making up the information processing module 45 is formed by the computer composing the server 6, and an application program (no shown) executed on an OS (operation program) of the computer.

The reception processing module 13 is configured to receive the measurement data transmitted from the plurality of measurement information terminals 2A, and store the measurement data in the storage 50. The reception processing module 13 stores the measurement data with associating with an identification information ID.

The diagnosis module 8 is configured to perform data processing of measurement data, i.e., malfunction diagnosis of the diagnosis subject 1 on the basis of the measurement data, in accordance with a set diagnosis condition F2. In this diagnosis, in the case where the measurement data is acceleration data, vibration analysis is performed by, for example, FFT (frequency analysis), and if a frequency component greater than a threshold value appears, malfunction determination is performed by estimation of a fault portion in a bearing, OA (overall) value determination based on a threshold value, or the like. When the measurement data is temperature data, the temperature data is compared to a threshold value and used for determination, for example. The diagnosis module 8 may be configured to perform the processes such as malfunction determination described in the first embodiment.

The diagnosis condition change module 49 is configured to change a set diagnosis condition to be used by the diagnosis module 8, in accordance with the diagnosis condition F2 transmitted from the result display information terminal 2B. The diagnosis condition F2 includes a threshold value for malfunction determination, a usage condition of the diagnosis subject 1, and the specifications of the diagnosis subject 1 (for example, in the case where the diagnosis subject 1 includes a bearing, the bearing specifications). The "usage condition" is, for example, a rotation speed of a bearing, a load applied to a bearing, or the like. The bearing specifications include a bearing type, a main dimension of the bearing, bearing data, a sealing format, a retainer format, and the like. The diagnosis module 8 is configured to perform data processing of performing various calculations and diagnoses in accordance with the diagnosis condition F2. A diagnosis result obtained through diagnosis by the diagnosis module 8 is stored into the storage 50 with being associated with an identification information ID.

The diagnosis result transmission module 14 is configured to transmit the diagnosis result obtained by the diagnosis module 8 to the result display information terminal 2B via the communication device 44. The diagnosis result transmission module 14 has a function of transmitting the diagnosis result to the result display terminal 2B in response to a diagnosis result request signal transmitted from the result display information terminal 2B. In this case, the diagnosis result about the measurement data from the measurement information terminal 2A specified by the identification information ID included in the diagnosis result request signal is extracted from the diagnosis result stored in the storage 50, and the extracted diagnosis result is transmitted. Besides such transmission in response to the diagnosis result request signal, the diagnosis result transmission module 14 may transmit the diagnosis result to the result display information terminal 2B when diagnosis is finished, for example.

The result display information terminal 2B is formed by a personal computer, a portable information terminal, or the like, and includes a communication device 51, an information processing module 52, and a screen display device 21. The communication device 51 is configured to communicate with the communication line network 7. The screen display device 21 is configured to display an image on a liquid crystal display or the like. Besides these, the result display information terminal 2B has an input module (not shown) such as a keyboard, a mouse, a touch panel, or the like.

The information processing module 52 includes a measurement instruction module 54, a diagnosis condition instruction module 55, a diagnosis result request module 56, and a diagnosis result reception module 57, which are realized by hardware of a computer composing the result display information terminal 2B and a monitoring program (not shown) which is an application program to be executed on an OS of the computer.

The measurement instruction module 54 is configured to generate the measurement condition instruction information F1, and transmit the measurement condition instruction information F1 to the measurement information terminal 2A. As described above, the measurement condition instruction information F1 includes a monitoring start instruction, a measurement cycle, and any other measurement instructions. These can be inputted from the input module (not shown) such as a keyboard, or may be read from a storage medium or the like (not shown).

The diagnosis condition instruction module 55 is configured to generate the diagnosis condition F2, and transmit the diagnosis condition F2 to the diagnosis device 2. As described above, the diagnosis condition F2 includes a threshold value, a usage condition, and diagnosis subject specifications (bearing specifications). These can be inputted from the input module (not shown) such as a keyboard, or may be read from a storage medium or the like (not shown).

The measurement instruction module 54 and the diagnosis condition instruction module 55 each output an indication that requests input of a keyword, to the screen of the screen display device 21, confirms whether or not an inputted keyword matches a permission condition, and then, only when the inputted keyword matches the permission condition, permits change of the measurement condition instruction information and change of the diagnosis condition. The keyword includes, for example, alphanumeric characters. The permission condition may not necessarily require that the inputted keyword entirely matches a registered keyword, but the permission may be given when the inputted keyword contains a registered character string, for example.

The diagnosis result reception module 57 is configured to receive the diagnosis result from the server 6, and display the diagnosis result on the screen of the screen display device 21.

The diagnosis result request module 56 is configured to transmit, to the server 6, a diagnosis result request signal including the identification information ID assigned to a measurement information terminal 2A. This diagnosis result request signal is, for example, generated based on an input from the input module such as a keyboard, and transmitted based on a predetermined input.

Besides the above, the result display information terminal 2B includes a vibration analysis instruction module 58 configured to transmit a vibration analysis instruction to the diagnosis device (server) 6. The diagnosis module 8 of the server 6 has a function of performing vibration analysis in more detail than in the usual malfunction diagnosis, in response to the vibration analysis instruction. For example, the vibration analysis instruction module 58 gives an instruction for analyzing a bearing malfunctioning part by FFT to the result display information terminal 2B. In response to this instruction, the result display information terminal 2B causes the diagnosis device 6 to perform vibration analysis and transmit the result of the vibration analysis to the result display information terminal 2B, and then causes the screen display device 21 to display the content of the result.

Operation and effect in the machine component diagnosis system configured as described above will be described. First, an operator opens an application program installed on the result display information terminal 2B, inputs measurement condition instruction information F1 such as a usage condition and internal specifications of the diagnosis subject 1 and a threshold value for malfunction determination, and measurement condition instruction condition F1 such as a measurement cycle, and gives a monitoring start instruction which is a part of the measurement condition instruction information F1. Thus, the measurement information terminal 2A, which is mounted on the diagnosis subject 1 and has the identification information ID, periodically captures measurement data of vibration or the like of the monitor subject, and transmits the measurement data to the diagnosis device 6 formed in a server, via the communication line network 7 such as the Internet.

In the server 6, on the basis of the installed application program, the measurement data and the diagnosis information F2 are stored with being associated with an identification information ID. Then, as data processing by the diagnosis module 8, calculation is performed on the basis of information such as bearing specifications and a bearing usage condition, and the diagnosis condition F2 such as a threshold value, to perform malfunction determination. The result of the malfunction determination is informed to the result display information terminal 2B and displayed thereon, whereby malfunction of the diagnosis subject 1 is monitored.

If a change such as an operation method change is performed in the diagnosis subject 1 and thereby it becomes necessary to change the threshold value, the measurement cycle, the usage condition, and the like, a specific administrator who knows the keyword starts up the application program on the result display information terminal 2B to perform the change. In addition, by this application program, it is possible to, for example, when it is determined that malfunction has occurred, give a vibration analysis instruction to the server 6 to perform the analysis, or when an observer desires to perform confirmation, give a measurement instruction optionally from the result display information terminal 2B to perform measurement and malfunction determination.

According to the machine component diagnosis system of the present embodiment, as described above, vibration or the like of the diagnosis subject 1 is measured by the measurement information terminal 2A, and the measured data can be captured and stored in the server 6 via the Internet, or can be compared to an initially set threshold value to detect malfunction, and a result of the detection can be confirmed on the result display information terminal 2B.

Since keyword input is needed, only a specific administrator can change the threshold value for the diagnosis subject 1. Further, it is possible to, at any time other than normal measurement timing, give a measurement instruction from the result display information terminal 2B to confirm the state of the diagnosis subject 1.

According to this machine component diagnosis system, even a user can change the threshold value for malfunction detection for the diagnosis subject 1 even after the system is activate. Therefore, even if the usage condition of the diagnosis subject 1 is changed and therefore the level of malfunction determination is changed, it is possible to easily cope with such a situation without rewriting software.

Since change of the threshold value is performed through an input of a keyword, only a specific administrator who knows the keyword can perform the change, and therefore it is possible to perform management without unexpectedly changing the threshold value.

In this diagnosis system, with a set cycle, measurement of the diagnosis subject 1 is performed and the server 6 stores the management data and further detects malfunction of the monitor subject through threshold value comparison. Besides such a measurement timing, it is possible to confirm the current state when a measurement instruction is transmitted from the result display information terminal 2B. Therefore, it is easy to recognize the state of the diagnosis subject 1.

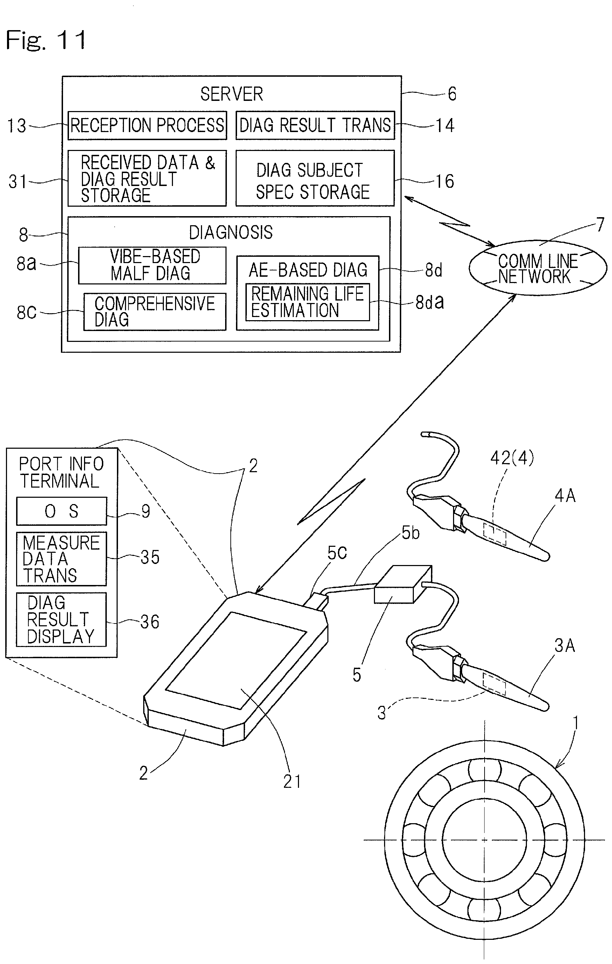

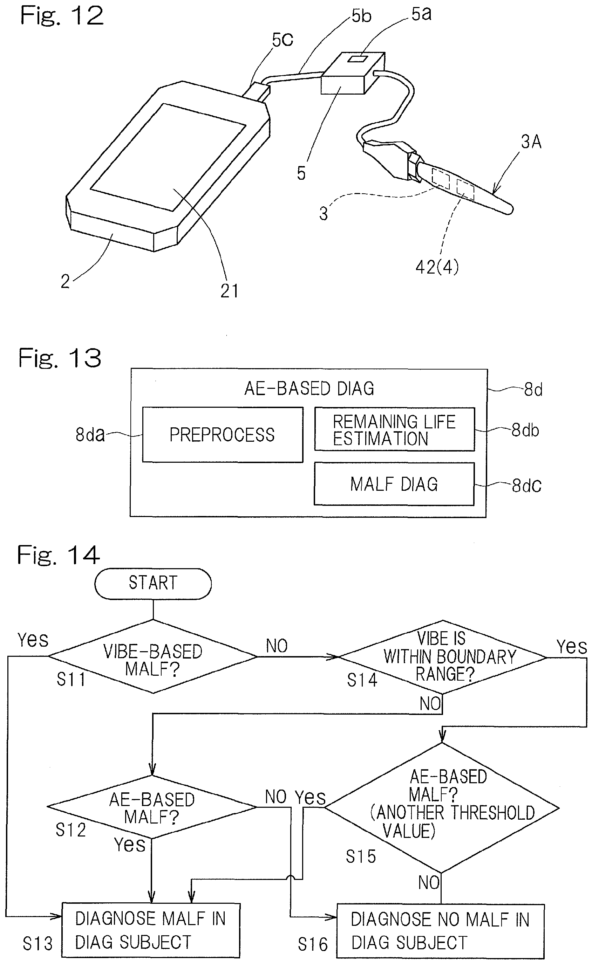

A fourth embodiment of the present invention will be described with reference to Fig. 11 and Fig. 14. In this embodiment, components, except for components particularly described below, are designated by the same reference numerals as those of the first embodiment, and the description thereof is omitted.

A machine component diagnosis system according to the present embodiment includes a system configured to inspect a diagnosis subject 1 such as a rotary machine component, and is different from the first embodiment in that the additional sensor 4 is an AE sensor 42. Therefore, one of measured characteristics of the diagnosis subject 1 is an AE wave, and characteristic data is AE data.

Similarly to the first embodiment, the AE sensor 42 and the vibration sensor 3 may be housed in different pickups 4A, 3A as shown in Fig. 11. Alternatively, the vibration sensor 3 and the AE sensor 42 may be housed in a common pickup 3A as shown in Fig. 12.

The server 6 includes: a reception processing module 13 that receives acceleration data as measurement data obtained within a certain period and AE data as measurement data obtained within a period other than the certain period, which data have been transmitted from the portable information terminal 2; a diagnosis module 8 that diagnoses malfunction of a diagnosis subject 1 on the basis of the received acceleration data or on the basis of the received acceleration data and the received AE data, and diagnoses the remaining lifetime of the diagnosis subject 1 on the basis of the AE data; and a diagnosis result transmission module 14 that sends a diagnosis result of the diagnosis module 8 back to the information terminal. The server 6 further includes: a received data and diagnosis result storage 31 that stores the various data received by the reception processing module 13 and the diagnosis result of the diagnosis module 8; and a diagnosis subject specification storage 16 constructed as a database having, stored therein, specifications of various diagnosis subjects 1, for example, specification of a bearing.

The diagnosis module 8 of the server 6 shown in Fig. 11 includes: a vibration-based malfunction diagnosis unit 8a that diagnoses malfunction of the diagnosis subject 1 on the basis of the acceleration data; an AE-based diagnosis unit 8d that estimates the remaining lifetime of the diagnosis subject 1, and diagnoses malfunction of the diagnosis subject 1 on the basis of the AE data; and a comprehensive diagnosis unit 8c that finally diagnoses malfunction and the like of the diagnosis subject 1 by using the diagnosis results of the vibration-based malfunction diagnosis unit 8a and the AE-based diagnosis unit 8d. The comprehensive diagnosis unit 8c definitely determines that malfunction has occurred in the diagnosis subject 1 when either the vibration-based malfunction diagnosis unit 8a or the AE-based diagnosis unit 8b has determined that malfunction has occurred.

Fig. 13 shows a specific example of the AE-based diagnosis unit 8d. In this example, the AE-based diagnosis unit 8d includes a preprocessing section 8da, a remaining lifetime estimation section 8db, and a malfunction diagnosis section 8dc. It is possible to detect inner cracks of a plurality of members in the diagnosis subject 1 on the basis of the AE data. Specifically, the remaining lifetime estimation section 8db has relationship setting information, in the form of a graph or a table, representing the relationship between AE data corresponding to inner cracks and a remaining lifetime, which enables to estimate the remaining lifetime according to the inner cracks. Estimation of the remaining lifetime of the diagnosis subject 1 is performed by extracting the estimated remaining lifetime with reference to the relationship setting information, by using the received AE data as a key. In this case, the remaining lifetime of the diagnosis subject 1 as a whole may be estimated, or the remaining lifetime of a specific component included in the diagnosis subject 1 may be estimated. The preprocessing section 8da generates a signal obtained by subjecting the received AE data to envelope processing. The malfunction diagnosis section 8dc compares the signal obtained through envelope processing by the preprocessing section 8da with a threshold value, and diagnoses that malfunction has occurred in the diagnosis subject 1, if the signal exceeds the threshold value, or is equal to or greater than the threshold value.

Fig. 14 shows an example of processing performed by the comprehensive diagnosis section 8c (Fig. 11). The vibration-based malfunction diagnosis unit 8a determines presence/absence of malfunction (S11). If the determination result is that vibration-based malfunction has occurred, it is diagnosed that malfunction has occurred in the diagnosis subject 1 (S 13). When no vibration-based malfunction has occurred, it is determined whether or not the degree of vibration falls within a boundary range, that is, whether or not the degree of vibration falls within a range in which it is difficult to definitely diagnose, based on only vibration, that malfunction has occurred, although it has been determined that no vibration-based malfunction has occurred (S 14). When the degree of vibration does not fall within the boundary range, presence/absence of AE-based malfunction is determined (S12). If it has been determined that AE-based malfunction has occurred, by the malfunction diagnosis section 8dc of the AE-based diagnosis unit 8d, it is diagnosed that malfunction has occurred in the diagnosis subject 1 (S13). If no AE-based malfunction has occurred, it is diagnosed that no malfunction has occurred in the diagnosis subject 1 (S16). In the step (S 14) of determining whether or not the degree of vibration falls within the boundary range, if the determination result is that the degree of vibration falls within the boundary range, it is then determined whether or not an envelope processing signal of AE data is higher than a threshold value that is lower than a threshold value for the determination (S12) of normal AE-based malfunction (S15). If the envelope processing signal is smaller than the threshold value, it is diagnosed that no malfunction has occurred in the diagnosis subject 1 (S16). If the envelope processing signal is greater than the threshold value, it is diagnosed that malfunction has occurred in the diagnosis subject 1 (S13). In this way, even when it is difficult to determine, based on only vibration, whether or not malfunction has occurred, since AE-based diagnosis is also performed, it is possible to accurately perform malfunction diagnosis. The boundary range extends from a lower-limit vibration value to an upper-limit vibration value. These upper-limit and lower-limit vibration values may be selected by an administrator, or may be automatically set during operation.

The diagnosis result sending-back module 14 shown in Fig. 11 sends the diagnosis results obtained by the diagnosis module 8, that is, presence/absence of malfunction and the remaining lifetime, back to the portable information terminal 2. In this case, the speed, the displacement, the acceleration effective value, the speed effective value, and the displacement effective value which have been obtained in the vibration-based malfunction diagnosis unit 8a are also sent back to the portable information terminal 2.

According to the machine component diagnosis system configured as described above, data obtained by inspecting the diagnosis subject 1 is sent from the portable information terminal 2 to the server 6, and the server 6 performs malfunction diagnosis and remaining lifetime diagnosis. Therefore, accurate malfunction diagnosis and accurate remaining lifetime diagnosis can be performed by utilizing excellent processing performance of the server 6. In this case, since the AE data is used, not only malfunction diagnosis but also estimation of remaining lifetime can be performed. Further, in addition to the acceleration data measured by the vibration sensor 3, the AE data measured by the AE sensor 42 is also used for malfunction diagnosis, whereby accuracy of malfunction diagnosis is enhanced. Further, since the acceleration data obtained by the vibration sensor 3 is used, a malfunctioning part can be specified by frequency analysis or the like, and moreover, use of the AE data obtained by the AE sensor 42 makes specification of a malfunctioning part more reliable.

The diagnosis module 8 of the server 6 includes the vibration-based malfunction diagnosis unit 8a and the AE-based diagnosis unit 8d, and when at least one of the vibration-based malfunction diagnosis unit 8a and the AE-based diagnosis unit 8d determines that malfunction has occurred, it is diagnosed that malfunction has occurred in the diagnosis subject 1. Therefore, diagnosis of malfunction is less likely to fail. Further, there are cases where the acceleration data falls within a boundary range, that is, where the acceleration data falls within a range in which it is difficult to determine presence/absence of malfunction. Under such a difficult situation, final determination that malfunction has occurred is made when it is determined, on the basis of the AE data, that malfunction has occurred, whereby malfunction diagnosis can be performed more accurately.

In the case where a statistical processing result of AE data is also transmitted by the diagnosis result transmission module 14, the AE can also be precisely recognized in the portable information terminal 2.

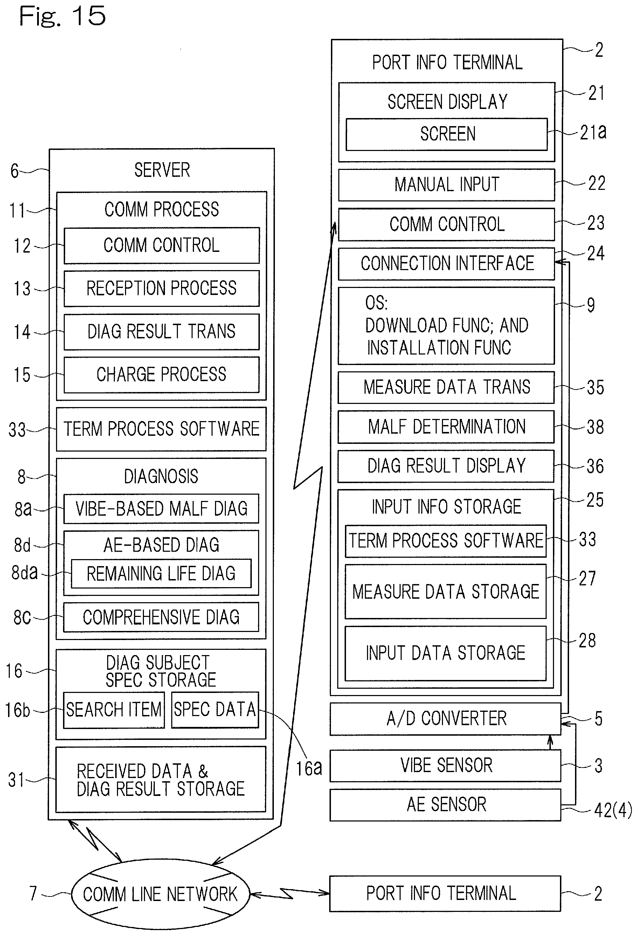

Fig. 15 shows a machine component diagnosis system according to a fifth embodiment of the present invention. In this embodiment, components, except for components particularly described below, are designated by the same reference numerals as those of the second and fourth embodiments, and the description thereof is omitted.

In the present embodiment, similarly to the fourth embodiment, an AE sensor 42 is used as an additional sensor 4 instead of the temperature sensor 41 of the second embodiment shown in Fig. 7. In addition, the server 6 is provided with an AE-based diagnosis unit 8d instead of the temperature-based malfunction diagnosis unit 8b of the second embodiment shown in Fig. 7. The received data and diagnosis result storage 31 is configured to store the result of processing performed by the diagnosis module 8, for example, the diagnosis results obtained by the AE-based diagnosis unit 8d, the vibration-based malfunction diagnosis unit 8a, and the comprehensive diagnosis unit 8c. While the diagnosis result obtained by the comprehensive diagnosis unit 8c is necessarily stored in the received data and diagnosis result storage 31, the diagnosis results obtained by the AE-based diagnosis unit 8d and/or the vibration-based malfunction diagnosis unit 8a are not necessarily stored therein.

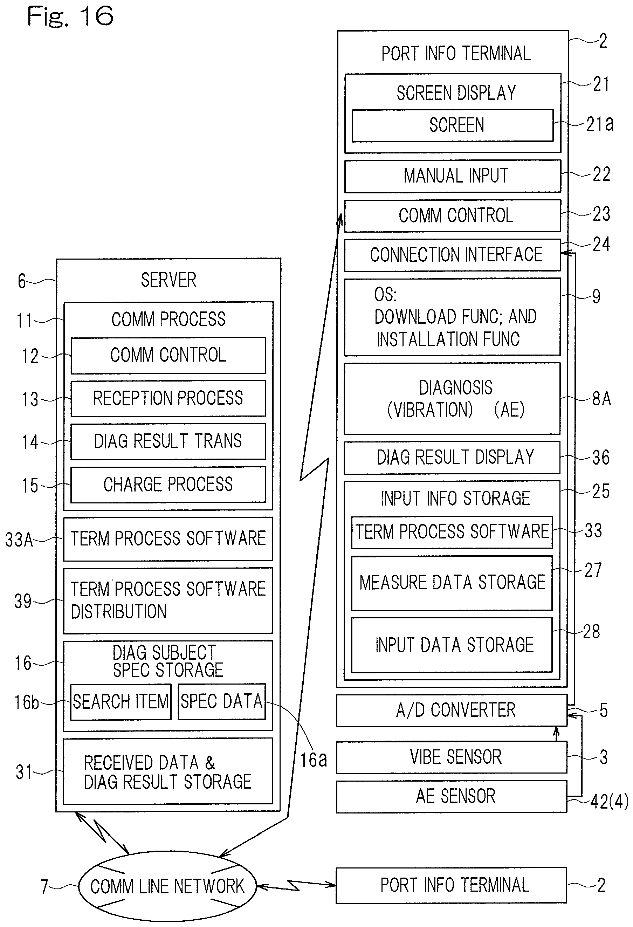

Fig. 16 shows a machine component diagnosis system according to a second reference mode which is not included in the scope of the present invention. In this reference mode, similarly to the fourth and fifth embodiments, an AE sensor 42 is provided as an additional sensor 4 instead of the temperature sensor 41 in the first reference mode shown in Fig. 8. In addition, the diagnosis module 8A of the portable information terminal 2 diagnoses malfunction on the basis of AE instead of temperature, in contrast to the diagnosis module 8A according to the first reference mode shown in Fig. 8. The received data and diagnosis result storage 31 of the server 6 is configured to store the result of processing performed by the diagnosis module 8, for example, the diagnosis results obtained by the AE-based diagnosis unit 8d, the vibration-based malfunction diagnosis unit 8a, and the comprehensive diagnosis unit 8c.

In this reference mode, as shown in Fig. 16, the diagnosis module 8A provided in the portable information terminal 2 is caused to perform the processing of the diagnosis module 8 of the fifth embodiment shown in Fig. 15.

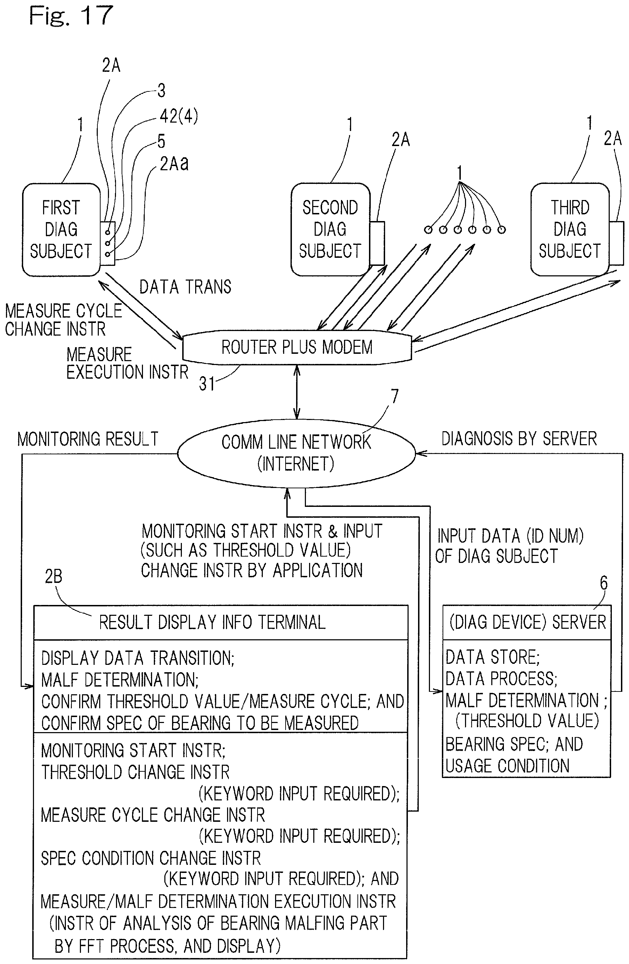

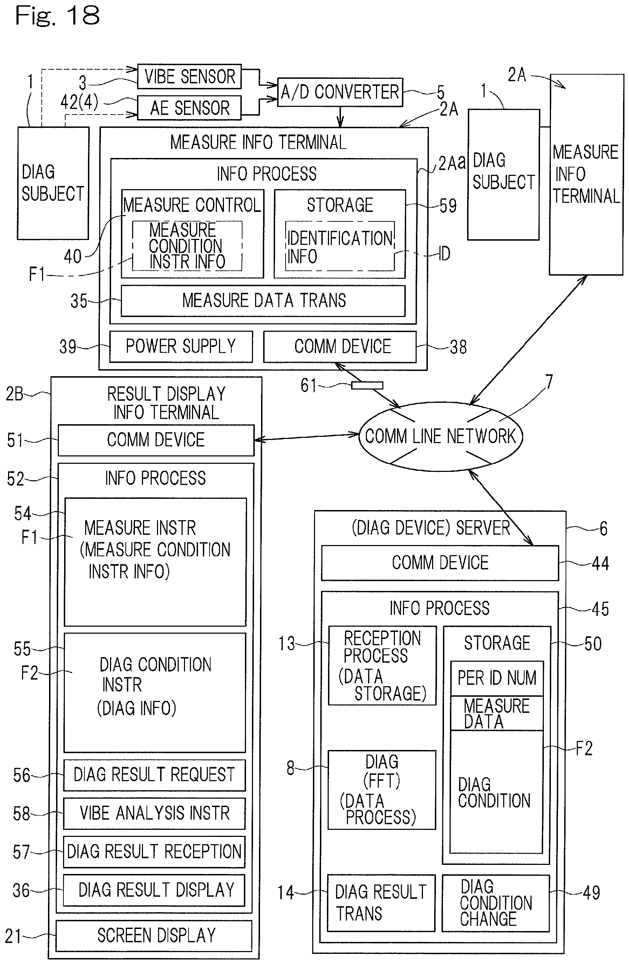

Fig. 17 and Fig. 18 show a sixth embodiment of the present invention. In this embodiment, components, except for components particularly described below, are designated by the same reference numerals as those of the third, fourth, and fifth embodiments, and the description thereof is omitted.

Specifically, in the present embodiment, similarly to the fourth and fifth embodiments, an AE sensor 42 is provided instead of the temperature sensor 41 of the third embodiment shown in Figs. 9 and 10.

The diagnosis module 8 of the server 6 is configured to perform data processing of measurement data, that is, malfunction diagnosis of the diagnosis subject 1 on the basis of the measurement data, in accordance with the diagnosis condition F2. In this diagnosis, in the case where the measurement data is acceleration data, vibration analysis is performed by, for example, FFT (frequency analysis), and if a frequency component greater than a threshold value appears, malfunction determination is performed by, for example, estimating a fault portion in a bearing, or performing OA (overall) determination based on a threshold value. When the measurement data is AE data, the diagnosis module 8 has a relationship setting module (not shown), in the form of a graph or a table, representing the relationship between a remaining lifetime and AE data. Estimation of the remaining lifetime of the diagnosis subject 1 is performed by extracting the estimated remaining lifetime with reference to the relationship setting information, by using the received AE data as a key. Regarding the AE data, in the diagnosis module 8, an envelope processing signal is compared with a threshold value, and if the signal exceeds the threshold value or is equal to or greater than the threshold value, it is diagnosed that malfunction has occurred in the diagnosis subject 1. The diagnosis module 8 may be configured to perform the processes such as malfunction determination described for the fourth embodiment.

In the server 6 according to the present embodiment, on the basis of the installed application program, the measurement data and the diagnosis information F2 are stored with being associated with an identification information ID. Then, as data processing by the diagnosis module 8, calculation is performed on the basis of information such as bearing specifications and a bearing usage condition, and the diagnosis condition F2 such as a threshold value, to perform malfunction determination and estimation of the remaining lifetime. The result of the malfunction determination is informed to the result display information terminal 2B and displayed thereon, whereby malfunction of the diagnosis subject 1 is monitored.

The present invention is not limited to the above embodiments, and various additions, modifications, or deletions are possible without departing from the scope of the present invention.

The additional sensor 4 is the temperature sensor 41 in the first to third embodiments while the additional sensor 4 is the AE sensor 42 in the fourth to sixth embodiments. Alternatively, two additional sensors 4 may be provided, and these additional sensors 4 may be the temperature sensor 41 and the AE sensor 42, respectively. The respective characteristics of the diagnosis subject 1 may be measured by three sensors, that is, the vibration sensor 3, the temperature sensor 41, and the AE sensor 42.

### [Reference Numerals]

- 1: diagnosis subject
- 2: information terminal
- 3: vibration sensor
- 4: additional sensor
- 41: temperature sensor
- 42: AE sensor
- 5: A/D converter
- 6: server
- 7: communication line network
- 8: diagnosis module
- 13: reception processing module
- 14: diagnosis result transmission module
- 35: measurement data transmission module
- 36: diagnosis result display module

## Claims

1. A machine component diagnosis system for diagnosing malfunction of a diagnosis subject including a machine component, the system comprising:
at least one information terminal;
a server connected to the at least one information terminal via a communication line network;
a vibration sensor configured to measure vibration of the diagnosis subject;
an additional sensor configured to measure one characteristic of the diagnosis subject, the additional sensor including a temperature sensor or an AE sensor, the temperature sensor being configured to measure, as the one characteristic, temperature of the diagnosis subject, the AE sensor being configured to measure, as the one characteristic, an acoustic emission wave (AE wave); and
an A/D converter configured to perform A/D conversion on a piece of acceleration data representing acceleration of the vibration measured by the vibration sensor, and on a piece of characteristic data representing the one characteristic measured by the additional sensor, wherein
each of the at least one information terminal includes:
a measurement data transmission module configured to capture the A/D converted pieces of acceleration data and characteristic data, and transmit the pieces of data to the server; and
a diagnosis result display module configured to display a diagnosis result that is sent back from the server in response to the transmitted pieces of data, and
the server includes:
a reception processing module configured to receive the pieces of acceleration data and characteristic data transmitted from the information terminal;
a diagnosis module configured to diagnose malfunction of the diagnosis subject by using the one characteristic represented by the piece of characteristic data, when the acceleration of the vibration represented by the received piece of acceleration data falls within a boundary range for malfunction determination; and
a diagnosis result transmission module configured to send a diagnosis result of the diagnosis module back to the information terminal.

2. The machine component diagnosis system as claimed in claim 1, wherein
when the acceleration of the vibration represented by the received piece of acceleration data falls within the boundary range, the diagnosis module diagnoses malfunction of the diagnosis subject by comparing the one characteristic represented by the piece of characteristic data with a boundary level that is different from a normal level.

3. The machine component diagnosis system as claimed in claim 1 or 2, wherein
the additional sensor includes the temperature sensor, the one characteristic is the temperature, and the piece of characteristic data is a piece of temperature data representing the temperature measured by the temperature sensor.

4. The machine component diagnosis system as claimed in claim 1 or 2, wherein
the additional sensor includes the AE sensor, the one characteristic is the AE wave, and the piece of characteristic data is a piece of AE data representing the AE wave measured by the AE sensor.

5. The machine component diagnosis system as claimed in any one of claims 1 to 4, wherein
the diagnosis subject includes a rotary machine component having a rolling element.

6. The machine component diagnosis system as claimed in any one of claims 1 to 5, wherein
the information terminal includes a general-purpose portable information terminal having an OS capable of installing an application program, and the measurement data transmission module and the diagnosis result display module are implemented in the portable information terminal when terminal processing software including the application program is installed.

7. The machine component diagnosis system as claimed in any one of claims 1 to 6, wherein
the vibration sensor and the additional sensor are provided in dedicated two pickups, respectively, and the two pickups are configured to be exchangeably connected to the A/D converter.

8. The machine component diagnosis system as claimed in any one of claims 1 to 6, wherein
the vibration sensor and the additional sensor are provided in a common pickup, and the piece of acceleration data or characteristic data is inputted to the measurement data transmission module, the inputted piece being changed by a switching operation of a changeover switch provided in the A/D converter or by the measurement data transmission module having a switching function.

9. The machine component diagnosis system as claimed in claim 3 or any one of claims 5 to 8 that are dependent from claim 3, wherein
the diagnosis module of the server includes:
a vibration-based malfunction diagnosis unit configured to diagnose malfunction of the diagnosis subject on the basis of the acceleration of the vibration represented by the piece of acceleration data;
a temperature-based malfunction diagnosis unit configured to diagnose malfunction of the diagnosis subject on the basis of the temperature represented by the piece of temperature data; and
a comprehensive diagnosis unit configured to finally diagnose malfunction of the diagnosis subject 1 by using diagnosis results of the vibration-based malfunction diagnosis unit and the temperature-based malfunction diagnosis unit, and
the comprehensive diagnosis unit determines that malfunction has occurred in the diagnosis subject, when either the vibration-based malfunction diagnosis unit or the temperature-based malfunction diagnosis unit determines that malfunction has occurred.

10. The machine component diagnosis system as claimed in claim 4 or any one of claims 5 to 8 that are dependent from claim 4, wherein
the diagnosis module of the server includes:
a vibration-based malfunction diagnosis unit configured to diagnose malfunction of the diagnosis subject on the basis of the acceleration of the vibration represented by the piece of acceleration data;
an AE-based diagnosis unit having a function to diagnose malfunction of the diagnosis subject on the basis of the AE wave represented by the piece of AE data; and
a comprehensive diagnosis unit configured to finally diagnose malfunction of the diagnosis subject 1 by using diagnosis results of the vibration-based malfunction diagnosis unit and the AE-based diagnosis unit.

11. A server including the server in the machine component diagnosis system as claimed in any one of claims 1 to 10.

12. A machine component diagnosis system for diagnosing malfunction of a plurality of diagnosis subjects each including a machine component, the system comprising:
a plurality of measurement information terminals associated with the plurality of diagnosis subjects, respectively;
a result display information terminal (2);
a server connected to the plurality of measurement information terminals and to the result display information terminal via a communication line network;
a plurality of vibration sensors (3) associated with the plurality of diagnosis subjects (1), respectively, each vibration sensor (3) being configured to measure vibration of the associated diagnosis subject;
a plurality of additional sensors (4) associated with the plurality of diagnosis subjects (1), respectively, the plurality of additional sensors (4) including temperature sensors or AE sensors, each additional sensor (4) being configured to measure one characteristic of the associated diagnosis subject, each temperature sensor being configured to measure, as the one characteristic, temperature of the associated diagnosis subject, each AE sensor being configured to measure, as the one characteristic, an acoustic emission wave (AE wave) of the associated diagnosis subject; and
a plurality of A/D converters associated with the plurality of vibration sensors and the plurality of additional sensors, respectively, each A/D converter being configured to perform A/D conversion on a piece of acceleration data representing acceleration of the vibration measured by the associated vibration sensor and on a piece of characteristic data representing the one characteristic measured by the associated additional sensor, and to input the A/D converted pieces of data to the associated measurement information terminal, wherein
each of the plurality of measurement information terminals includes an information processing module configured to capture the inputted pieces of acceleration data and characteristic data to transmit the pieces of data to the server,
the result display information terminal includes a diagnosis result display module configured to display a diagnosis result transmitted from the server, and
the server includes:
a reception processing module configured to receive the pieces of acceleration data and characteristic data transmitted from any one of the plurality of measurement information terminals;
a diagnosis module configured to, when the acceleration of the vibration represented by the received piece of acceleration data falls within a boundary range for malfunction determination, diagnose, by using the one characteristic represented by the piece of characteristic data, malfunction of the diagnosis subject associated with the measurement information terminal that has transmitted the pieces of data; and
a diagnosis result transmission module configured to transmit a diagnosis result of the diagnosis module to the result display information terminal.

13. The machine component diagnosis system as claimed in claim 12, wherein
the diagnosis module, when the acceleration of the vibration represented by the piece acceleration data falls within the boundary range, diagnoses malfunction of the diagnosis subject by comparing the one characteristic represented by the piece of characteristic data with a boundary level that is different from a normal level.

14. The machine component diagnosis system as claimed in claim 12 or 13, wherein
each of the plurality of additional sensors includes a temperature sensor, the one characteristic is temperature, and the piece of characteristic data is a piece of temperature data representing the temperature measured by each of the plurality of temperature sensors.

15. The machine component diagnosis system as claimed in claim 12 or 13, wherein
each of the plurality of additional sensors includes an AE sensor, the one characteristic is an AE wave, and the piece of characteristic data is a piece of AE data representing the AE wave measured by each of the plurality of AE sensors.
